# EUROPEAN PATENT APPLICATION

(11) **EP 3 018 235 A1**
(43) Date of publication of application: **11.05.2016**
(21) Application number: 14820713.7
(22) Date of filing: 27.06.2014
(51) Int. Cl.: C25B 9/00, B01J 19/08, B01J 19/12, B01J 19/24, C25B 11/02

(54) **PHOTOELECTROCHEMICAL REACTOR**

(30) Priority: 03.07.2013 JP 2013139686
(71) Applicant: Kabushiki Kaisha Toshiba, Inc., Tokyo 105-8001 (JP)
(72) Inventor: KUDO, Yuki, Tokyo 105-8001 (JP); MIKOSHIBA, Satoshi, Tokyo 105-8001 (JP); ONO, Akihiko, Tokyo 105-8001 (JP); TAMURA, Jun, Tokyo 105-8001 (JP); KITAGAWA, Ryota, Tokyo 105-8001 (JP); HUANG, Chingchun, Tokyo 105-8001 (JP)
(74) Representative: Hoffmann Eitle
(86) International application number: PCT/JP2014/067203
(87) International publication number: WO 2015/002093

(57) **Abstract**

A photoelectrochemical reaction device of an embodiment includes a solution tank (71) configured to contain a first solution (81), a stack (41) accommodated in the solution tank, and including a first electrode (11), a second electrode (21) formed below the first electrode, a photovoltaic layer (31) formed between the first electrode and the second electrode and configured to perform charge separation by light energy from above, and a first insulating layer (22) formed on an exposed surface of the second electrode, a tube (61) accommodated in the solution tank, arranged above the first electrode to face the first electrode, configured to contain a second solution, and including pores extending from an outer surface to an inner surface, and a wiring (51) configured to electrically connect the second electrode and the tube.

## Description

### Technical Field

Embodiments described herein relate generally to a photoelectrochemical reaction device.

### Background Art

Recently, fossil fuels such as oil and coal are in danger of running out, so expectations for sustainably usable renewable energies are rising. As one of these renewable energies, solar cells and heat power generation using the sunlight are being extensively developed. However, a storage battery must be used to store power (electricity) generated by the solar cells. This poses the problems that the storage battery increases the cost, and a loss occurs during power storage.

On the other hand, techniques which directly convert the sunlight into not electricity but a chemical substance (chemical energy) such as hydrogen (H₂), carbon monoxide (CO), methanol (CH₃OH), or formic acid (HCOOH) are attracting attention. These techniques which convert the sunlight into a chemical substance and store the chemical substance in a cylinder or tank have the advantages that the energy storage cost is lower and the loss caused by storage is smaller than those when the sunlight is converted into electricity and the electricity is stored in a storage battery.

Patent literature 1 is an example of the photoelectrochemical conversion techniques which photoelectrochemically convert the sunlight into a chemical substance. In patent literature 1, a carbon dioxide (CO₂) reducing catalyst is formed on the surface of a photocatalyst. This CO₂ reducing catalyst is connected to another photocatalyst by an electric wire. The other photocatalyst obtains a potential by light energy. The CO₂ reducing catalyst obtains a reduction potential from the other photocatalyst by the electric wire, thereby reducing CO₂ and producing formic acid. Thus, patent literature 1 uses two-stage excitation in order to obtain a potential necessary to reduce CO₂ by the photocatalyst by using visible light. However, the efficiency of conversion from the sunlight to the chemical energy is as very low as 0.04%. This is so because the energy efficiency of the photocatalyst which is excited by visible light is low.

In non-patent literature 1, a structure in which three photovoltaic layers are stacked is used to obtain a reaction potential. Then, an oxidation-reduction reaction of water (H₂O) is performed by forming a catalyst on the electrodes of the photovoltaic layers, thereby obtaining H₂ as a chemical substance. Since, however, oxygen (O₂) produced by the oxidation reaction and H₂ produced by the reduction reaction coexist, it is necessary to separate these products in a later step.

Also, in non-patent literature 1, the efficiency of conversion to electrical energy of the photovoltaic layer itself is 7.7%, but the efficiency of conversion to H₂, i.e., the efficiency of conversion from the sunlight to chemical energy is as low as 4.7%. One cause of this is that a light-shielding metal mesh electrode is installed on the light irradiation side of the photovoltaic layer. This metal mesh reduces the quantity of light which irradiates the photovoltaic layer.

In addition, non-patent literature 1 describes a form which causes a reaction by a catalyst formed on a side of the photovoltaic layer, which is opposite to the light irradiation side. In this case, however, the efficiency of conversion from the sunlight to chemical energy is 2.5%, i.e., lower than that in the above-mentioned metal mesh form. The cause of this is that ions generated on the light irradiation side (ions to be used in the reaction of the catalyst on the opposite side) diffuse a long distance to the opposite side of the light irradiation side, so the potential is lost.

As described above, demands have arisen for a photoelectrochemical conversion technique capable of separating chemical substances generated by an oxidation-reduction reaction, and increasing the efficiency of conversion from the sunlight to chemical energy by effectively using the electromotive force generated by a photovoltaic layer.

### Citation List

### Patent Literature

Patent Literature 1: Jpn. Pat. Appln. KOKAI Publication No. 2011-094194

### Non-Patent Literature

Non-Patent Literature 1: S.Y. Reece, et al., Science, vol. 334, pp. 645 (2011)

### Summary of Invention

### Technical Problem

The present invention provides a photoelectrochemical reaction apparatus having a function of separating products obtained by an oxidation-reduction reaction, and a high efficiency of conversion from the sunlight to chemical energy.

### Solution to Problem

According to one embodiment, a photoelectrochemical reaction device of an embodiment includes a solution tank configured to contain a first solution, a stack accommodated in the solution tank, and including a first electrode, a second electrode formed below the first electrode, a photovoltaic layer formed between the first electrode and the second electrode and configured to perform charge separation by light energy from above, and a first insulating layer formed on an exposed surface of the second electrode, a tube accommodated in the solution tank, arranged above the first electrode to face the first electrode, configured to contain a second solution, and including pores extending from an outer surface to an inner surface, and a wiring configured to electrically connect the second electrode and the tube.

### Brief Description of Drawings

[FIG. 1] FIG. 1 is a perspective view showing the arrangement of a photoelectrochemical reaction device according to the first embodiment.
[FIG. 2] FIG. 2 is a sectional view showing the arrangement of the photoelectrochemical reaction device according to the first embodiment.
[FIG. 3] FIG. 3 is a sectional view showing an example of a stack according to the first embodiment.
[FIG. 4] FIG. 4 is a sectional view showing another example of the stack according to the first embodiment.
[FIG. 5] FIG. 5 is a sectional view showing the operation principle of the photoelectrochemical reaction device according to the first embodiment.
[FIG. 6] FIG. 6 is a sectional view showing the arrangement of a photoelectrochemical reaction device according to the second embodiment.
[FIG. 7] FIG. 7 is a sectional view showing arrangement 1 of a photoelectrochemical reaction device according to the third embodiment.
[FIG. 8] FIG. 8 is a sectional view showing arrangement 2 of the photoelectrochemical reaction device according to the third embodiment.
[FIG. 9] FIG. 9 is a sectional view showing arrangement 3 of the photoelectrochemical reaction device according to the third embodiment.
[FIG. 10] FIG. 10 is a sectional view showing the arrangement of a photoelectrochemical reaction device according to the fourth embodiment.
[FIG. 11] FIG. 11 is a perspective view showing the arrangement of a photoelectrochemical reaction device according to the fifth embodiment.
[FIG. 12] FIG. 12 is a sectional view showing the arrangement of the photoelectrochemical reaction device according to the fifth embodiment.
[FIG. 13] FIG. 13 is a plan view showing an example of the arrangement of the photoelectrochemical reaction device according to the fifth embodiment.
[FIG. 14] FIG. 14 is a plan view showing another example of the arrangement of the photoelectrochemical reaction device according to the fifth embodiment.
[FIG. 15] FIG. 15 is a sectional view showing the operation principle of the photoelectrochemical reaction device according to the fifth embodiment.
[FIG. 16] FIG. 16 is a sectional view showing the arrangement of a photoelectrochemical reaction device according to the sixth embodiment.
[FIG. 17] FIG. 17 is a sectional view showing the arrangement of a photoelectrochemical reaction device according to the seventh embodiment.
[FIG. 18] FIG. 18 is a sectional view showing the arrangement of a photoelectrochemical reaction device according to the eighth embodiment.

### Description of Embodiments

Embodiments will be explained below with reference to the accompanying drawings. In these drawings, the same reference numerals denote the same portions. Also, a repetitive explanation will be made as needed.

### 1. First Embodiment

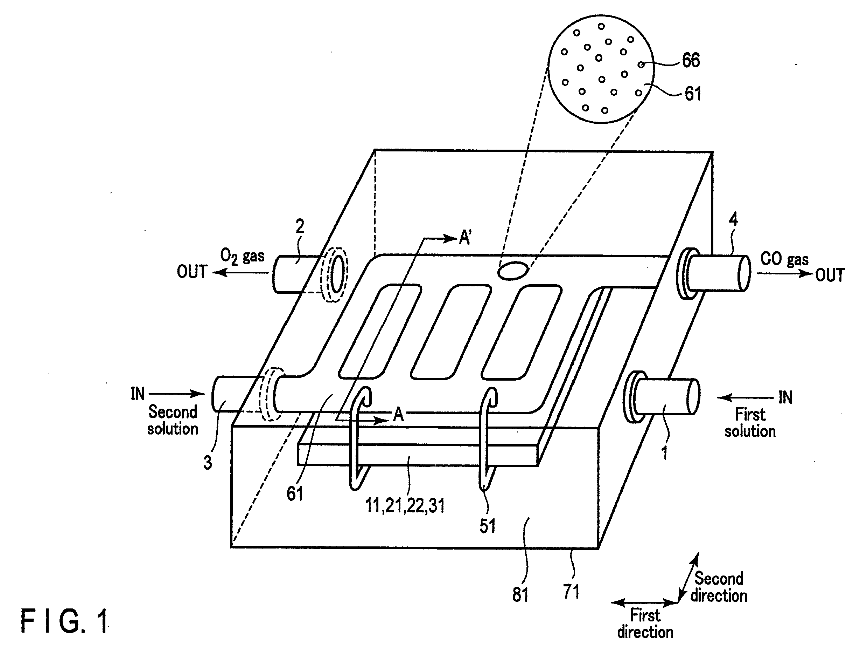

A photoelectrochemical reaction device according to the first embodiment will be explained below with reference to FIGS. 1, 2, 3, 4, and 5.

In the photoelectrochemical reaction device according to the first embodiment, a photoelectrochemical reaction cell includes a stack 41 including a first electrode 11, photovoltaic layer 31, second electrode 21, and first insulating layer 22, and a tube 61 electrically connected to the second electrode 21 by a wiring 51. This photoelectrochemical reaction cell is accommodated in a solution tank 71 filled with a first solution 81 containing H₂O, and the tube 61 is filled with a second solution 82 containing CO₂. This makes it possible to separate products obtained by an oxidation-reduction reaction, and increase the efficiency of conversion from the sunlight to chemical energy. The first embodiment will be explained in detail below.

### 1-1. Arrangement of First Embodiment

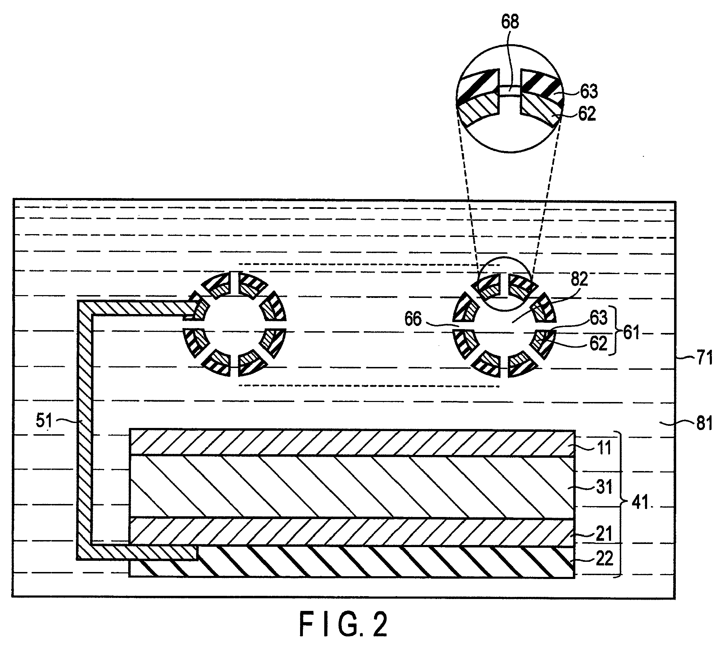

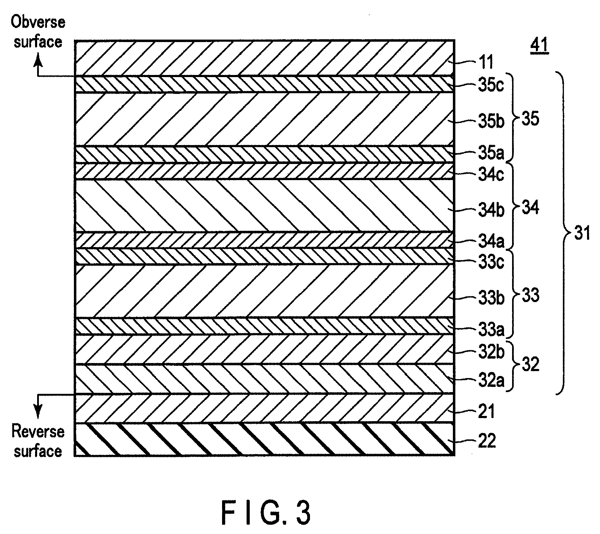

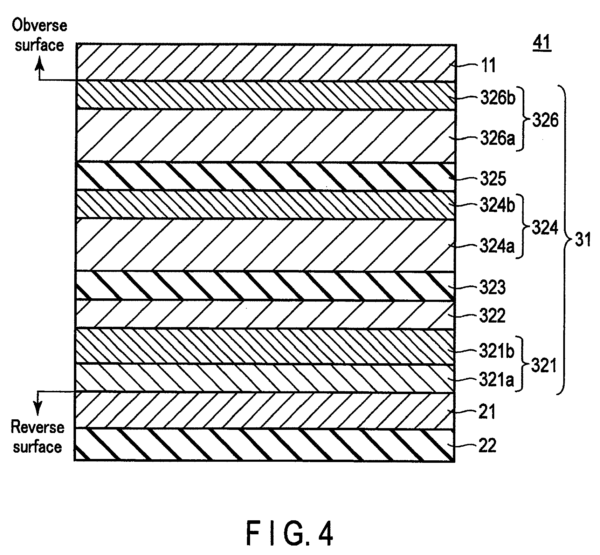

FIG. 1 is a perspective view showing the arrangement of the photoelectrochemical reaction device according to the first embodiment. FIG. 2 is a sectional view showing the arrangement of the photoelectrochemical reaction device according to the first embodiment, and taken along a wiring A - A' in FIG. 1. FIG. 3 is a sectional view showing an example of the stack 41 according to the first embodiment. FIG. 4 is a sectional view showing another example of the stack 41 according to the first embodiment.

As shown in FIGS. 1 and 2, the photoelectrochemical reaction device according to the first embodiment includes the photoelectrochemical reaction cell including the stack 41, wiring 51, and tube 61, and the solution tank 71 accommodating the photoelectrochemical reaction cell.

The solution tank 71 accommodates the photoelectrochemical reaction cell. Also, the solution tank 71 contains the first solution 81 so that the photoelectrochemical reaction cell is immersed in the solution. The first solution 81 is, e.g., a solution containing H₂O. An example of this solution is a solution containing an arbitrary electrolyte, and is desirably a solution which promotes the oxidation reaction of H₂O. A window made of a material having a high light transmittance, e.g., glass or acryl is formed in the upper surface of the solution tank 71. Irradiation light is emitted from above the solution tank 71. The photoelectrochemical reaction cell (to be described later) performs an oxidation-reduction reaction when irradiated with this irradiation light.

An injection port 1 and collection port 2 are connected to the solution tank 71. The injection port 1 injects a solution (the first solution 81) to be used in an oxidation reaction in the solution tank 71. The collection port 2 collects a gas (e.g., O₂) produced by the oxidation reaction in the solution tank 71.

The photoelectrochemical reaction cell includes the stack 41, wiring 51, and tube 61, and produces chemical energy from light energy. Each element of the photoelectrochemical reaction cell will be explained in detail below.

As shown in FIG. 3, an example of the stack 41 includes the first electrode 11, photovoltaic layer 31, second electrode 21, and first insulating layer 22. The stack 41 is a plate-like member expanding in a first direction and a second direction perpendicular to the first direction, and the constituent elements are sequentially formed on the electrode 21 as a base material. Note that this explanation will be made by assuming that the light irradiation side is the obverse surface (upper surface), and the side opposite to the light irradiation side is the reverse surface (lower surface).

The second electrode 21 is conductive. Also, the second electrode 21 is formed to support the stack 41 and increase its mechanical strength. The second electrode 21 is formed by a metal plate made of, e.g., Cu, Al, Ti, Ni, Fe, or Ag, or an alloy plate such as SUS containing at least one of these metals. The second electrode 21 may also be formed by a conductive resin or the like. Furthermore, the second electrode 21 is formed by a semiconductor substrate such as Si or Ge, or an ion-exchange membrane.

The photovoltaic layer 31 is formed on (the obverse surface (upper surface) of) the second electrode 21. The photovoltaic layer 31 includes a reflecting layer 32, first photovoltaic layer 33, second photovoltaic layer 34, and third photovoltaic layer 35.

The reflecting layer 32 is formed on the second electrode 21, and includes first and second reflecting layers 32a and 32b formed in this order from below. The first reflecting layer 32a has light reflectance and conductivity, and is made of a metal such as Ag, Au, Al, or Cu or an alloy containing at least one of these metals. The second reflecting layer 32b is formed to increase the light reflectance by adjusting the optical distance. Also, the second reflecting layer 32b joins to an n-type semiconductor layer (an n-type amorphous silicon layer 33a (to be described later)) of the photovoltaic layer 31. Therefore, the second reflecting layer 32b is desirably made of a material having light transmittance and capable of forming an ohmic contact with an n-type semiconductor layer. The second reflecting layer 32b is made of a transparent conductive oxide such as ITO (Indium Tin Oxide), zinc oxide (ZnO), FTO (Fluorine-doped Tin Oxide), AZO (Aluminum-doped Zinc Oxide), or ATO (Antimony-doped Tin Oxide).

The first, second, and third photovoltaic layers 33, 34, and 35 are solar cells using a pin-junction semiconductor, and have different light absorption wavelengths. By stacking these layers into a planar shape, the photovoltaic layer 31 can absorb light having a wide wavelength of the sunlight, and can more efficiently use the solar energy. In addition, a high open circuit voltage can be obtained because these photovoltaic layers are connected in series.

More specifically, the first photovoltaic layer 33 is formed on the reflecting layer 32, and includes the n-type amorphous silicon (a-Si) layer 33a, an intrinsic amorphous silicon germanium (a-SiGe) 33b, and a p-type microcrystalline silicon (µc-Si) layer 33c formed in this order from below. The a-SiGe layer 33b is a layer which absorbs light in a long-wavelength region of about 700 nm. That is, charge separation occurs in the first photovoltaic layer 33 due to light energy in the long-wavelength region.

Also, the second photovoltaic layer 34 is formed on the first photovoltaic layer 33, and includes an n-type, a-Si layer 34a, intrinsic a-SiGe layer 34b, and p-type, µc-Si layer 34c formed in this order from below. The a-SiGe layer 34b is a layer which absorbs light in a medium-wavelength region of about 600 nm. That is, charge separation occurs in the second photovoltaic layer 34 due to light energy in the medium-wavelength region. Furthermore, the third photovoltaic layer 35 is formed on the second photovoltaic layer 34, and includes an n-type, a-Si layer 35a, intrinsic a-SiGe layer 35b, and p-type, µc-Si layer 35c formed in this order from below. The a-SiGe layer 35b is a layer which absorbs light in a short-wavelength region of about 400 nm. That is, charge separation occurs in the third photovoltaic layer 35 due to light energy in the short-wavelength region.

As described above, charge separation occurs in the photovoltaic layer 31 due to light in each wavelength region. That is, holes are separated to the anode side (obverse surface side), and electrons are separated to the cathode side (reverse surface side). Thus, the photovoltaic layer 31 generates electromotive force.

The first electrode 11 is formed on the p-type semiconductor layer (p-type, µc-Si layer 35c) of the photovoltaic layer 31. Therefore, the first electrode 11 is desirably made of a material capable of forming an ohmic contact with a p-type semiconductor layer. The first electrode is made of a metal such as Ag, Au, Al, or Cu, or an alloy containing at least one of these metals. The first electrode 11 may also be made of a transparent conductive oxide such as ITO, ZnO, FTO, AZO, or ATO. Furthermore, the first electrode 11 may be formed by a structure in which a metal and transparent conductive oxide are stacked, a structure in which a metal and another conductive material are compounded, or a structure in which a transparent conductive oxide and another conductive material are compounded.

In this example, irradiation light reaches the photovoltaic layer 31 through the first electrode 11. Therefore, the first electrode 11 arranged on the light irradiation side (the upper side in the drawing) has light transmittance to the irradiation light. More specifically, the light transmittance of the first electrode 11 on the light irradiation side is preferably at least 10% or more, and more preferably, 30% or more of the irradiation amount of the irradiation light. Alternatively, the first electrode 11 has an aperture capable of transmitting light. The aperture ratio is preferably at least 10% or more, and more preferably, 30% or more.

The first insulating layer 22 is formed below the second electrode 21 (on the reverse surface (lower surface)). The first insulating layer 22 is formed to electrically insulate the second electrode 21 and first solution 81. The first insulating layer 22 is made of a metal oxide such as TiOₓ or Al₂O₃ having low reactivity to the first solution 81, or a resin of an organic compound.

The first insulating layer 22 is desirably formed not only on the reverse surface of the second electrode 21 but also on the side surfaces of the second electrode 21. That is, the first insulating layer 22 is formed on the exposed surfaces of the second electrode 21. In other words, the first insulating layer 22 is formed to cover the second electrode 21, and formed between the second electrode 21 and first solution 81.

Note that the film thickness of the second electrode 21 is much smaller than the planar dimensions (the dimensions in the first and second directions) of the second electrode 21. Therefore, most of the exposed surfaces of the second electrode 21 is the lower surface of the second electrode 21. Accordingly, the first insulating layer 22 need only be formed on at least the lower surface of the second electrode 21.

Note that the above explanation has been made by taking the photovoltaic layer 31 having the multilayered structure including the three photovoltaic layers as an example, but the present invention is not limited to this. The photovoltaic layer 31 may also be formed by a multilayered structure including two or more or four or more photovoltaic layers. Alternatively, one photovoltaic layer may be used in place of the multilayered photovoltaic structure. In addition, a solar battery using a pin-junction semiconductor has been explained in the above description, but a solar battery using a pn-junction semiconductor may also be used. Also, an example in which the semiconductor layers are made of Si and Ge has been explained, but the present invention is not limited to this, and it is also possible to use compound semiconductors such as GaAs, GaInP, AlGaInP, CdTe, and CuInGaSe. Furthermore, it is possible to apply various forms, i.e., single-crystal, polycrystalline, and amorphous forms. Moreover, the first electrode 11 and second electrode 21 can be formed either entirely or partially on the surfaces of the photovoltaic layer 31.

As shown in FIG. 4, another example of the stack 41 includes a first electrode 11, photovoltaic layer 31, and second electrode 21. The main difference of the other example of the stack 41 from the aforementioned example is the structure of the photovoltaic layer 31.

In the other example, the photovoltaic layer 31 includes a first photovoltaic layer 321, buffer layer 322, tunnel layer 323, second photovoltaic layer 324, tunnel layer 325, and third photovoltaic layer 326.

The first photovoltaic layer 321 is formed on the second electrode 21, and has a multilayered structure including a p-type Ge layer 321a and n-type Ge layer 321b formed in this order from below. On the first photovoltaic layer 321 (Ge layer 321b), the buffer layer 322 and tunnel layer 323 containing GaInAs are formed for lattice matching and electrical junction with GaInAs used in the second photovoltaic layer 324.

The second photovoltaic layer 324 is formed on the tunnel layer 323, and has a multilayered structure including a p-type GaInAs layer 324a and n-type GaInAs layer 324b formed in this order from below. On the second photovoltaic layer 324 (GaInAs layer 324b), the tunnel layer 325 containing GaInP is formed for lattice matching and electrical junction with GaInP used in the third photovoltaic layer 326.

The third photovoltaic layer 326 is formed on the tunnel layer 325, and has a multilayered structure including a p-type GaInP layer 326a and n-type GaInP layer 326b formed in this order from below.

In the photovoltaic layer 31 according to the other example, the stacking direction of the p-type and n-type and hence the polarity of the electromotive force are different from those of the photovoltaic layer 31 according to the example using the amorphous silicon-based material shown in FIG. 3.

The tube 61 is arranged above the stack 41, i.e., arranged on the light irradiation side of the stack 41. In other words, the tube 61 is formed at the first electrode 11. The tube 61 contains the second solution 82. The tube 61 physically separates the first solution 81 on the outside and the second solution 82 on the inside. Also, the tube 61 selectively transmits ions from the first solution 81 to the second solution 82 through pores 66 (to be described later). The tube 61 freely extends or bends in the first and second directions. The tube 61 may also be branched.

The second solution 82 is a solution containing, e.g., CO₂. The second solution 82 desirably has a high CO₂ absorptivity, and examples of a solution containing H₂O are aqueous solutions of NaHCO₃ and KHCO₃. The first and second solutions 81 and 82 can be the same solution, but different solutions can also be used as the first and second solutions 81 and 82 because the second solution 82 preferably has a high CO₂ absorptivity. In addition, the second solution 82 desirably contains a CO₂ absorbent which reduces the reduction potential of CO₂, increases the ion conductivity, and absorbs CO₂. An example of an electrolyte solution like this is an ion liquid which is made of a salt containing a cation such as an imidazolium ion or pyridinium ion and an anion such as BF⁴⁻ or PF⁶, and is in a liquid state over a broad temperature range, or an aqueous solution of this ion liquid. Another example of the electrolyte solution is an amine solution such as ethanolamine, imidazole, or pyridine, or an aqueous solution of this amine solution. Amine can be any of primary amine, secondary amine, and tertiary amine. Examples of primary amine are methylamine, ethylamine, propylamine, butylamine, pentylamine, and hexylamine. Hydrocarbon of amine may be substituted with alcohol or halogen. Examples of amine in which hydrocarbon is substituted are methanolamine, ethanolamine, and chloromethylamine. An unsaturated bond may also exist. These hydrocarbons similarly apply to secondary amine and tertiary amine. Examples of secondary amine are dimethylamine, diethylamine, dipropylamine, dibutylamine, dipentylamine, dihexylamine, dimethanolamine, diethanolamine, and dipropanolamine. Substituted hydrocarbons may also be different. This similarly applies to tertiary amine. Examples of amines having different hydrocarbons are methylethylamine and methylpropylamine. Examples of tertiary amine are trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. Examples of the cation of the ion liquid are a 1-ethyl-3-methylimidazolium ion, 1-methyl-3-propylimidazolium ion, 1-butyl-3-methylimidazol ion, 1-methyl-3-pentylimidazolium ion, and 1-hexyl-3-methylimidazolium ion. The 2-position of the imidazolium ion may also be substituted. Examples of the imidazolium ion in which the 2-position is substituted are a 1-ethyl-2,3-dimethylimidazolium ion, 1,2-dimethyl-3-propylimidazolium ion, 1-butyl2,3-dimethylimidazolium ion, 1,2-dimethyl-3-pentylimidazolium ion, and 1-hexyl-2,3-dimethylimidazolium ion. Examples of the pyridinium ion are methylpyridinium, ethylpyridinium, propylpyridinium, butylpyridinium, pentylpyridinium, and hexylpyridinium. In both the imidazolinium ion and pyridinium ion, an alkyl group may be substituted, and an unsaturated bond may exist. Examples of the anion are a fluoride ion, a chloride ion, a bromide ion, an iodide ion, BF⁴⁻, PF⁶⁻, CF₃COO⁻, CF₃SO³⁻, NO³⁻, SCN⁻, (CF₃SO₂)₃C⁻, bis(trifluoromethoxysulfonyl)imide, bis(trifluoromethoxysulfonyl)imide, and bis(perfluoroethylsulfonyl)imide. It is also possible to use a zweitterion obtained by coupling the cation and anion of the ion liquid by hydrocarbon.

The injection port 3 and collection port 4 are connected to the tube 61. The injection port 3 injects a liquid (the second solution 82) to be used in a reduction reaction in the tube 61. The collection port 4 collects a gas (e.g., CO) produced by the reduction reaction in the tube 61.

The tube 61 has a layout including, e.g., a first portion, a plurality of second portions, and a third portion. The first portion extends in the first direction and is connected to the injection port 3. The plurality of second portions extend parallel in the second direction, and one end of each second portion is connected to the first portion. The third portion extends in the first direction and is connected to the other end of each of the plurality of second portions. The third portion is also connected to the collection port 4.

The tube 61 includes a tubular base 62 and second insulating layer 63.

The base 62 is formed inside the tube 61, and has a cavity for containing the second solution 82. The base 62 is made of a material having a high conductivity and high processability. For example, the material is a metal such as Fe, Ni, Co, Cu, or Al, or an alloy containing at least one of these metals.

The second insulating layer 63 is formed outside the tube 61 and formed on the outer surface of the base 62. The second insulating layer 63 is formed to electrically insulate the first solution 81 and base 62. The second insulating layer 63 is made of a metal oxide such as TiOₓ or Al₂O₃ having a low reactivity to the first solution 81, or a resin of an organic compound.

The tube 61 (the base 62 and second insulating layer 63) has a plurality of pores 66 extending from the outer surface to the inner surface of the tube 61. The pores 66 selectively pass ions (e.g., H ions (H⁺)) generated by an oxidation reaction on the first electrode 11 to the interior of the tube 61. Since the base 62 of the tube 61 is electrically connected to the second electrode 21, ions having passed through the pores 66 are converted into, e.g., O₂, H₂, or an organic compound by the reduction reaction inside the base 62 of the tube 61. The pores 66 need only have a size through which ions pass. For example, the lower limit of the diameter (equivalent circle diameter) of the pores 66 is preferably 0.3 nm or more. Note that the equivalent circle diameter is defined by ((4 × area)/Π)^{0.5}. The shape of the pores 66 is not limited to a circle, and may also be an ellipse, triangle, or square. The layout of the pores 66 is not limited to a square matrix, and may also be a triangular matrix or random. The pores 66 may also be filled with an ion-exchange membrane 68. Examples of the ion-exchange membrane 68 are a cation-exchange membrane such as Nafion or Flemion, and an anion-exchange membrane such as Neosepta or Selemion. Furthermore, the pores 66 may be filled with a glass filter or agar-agar.

The wiring 51 electrically connects the second electrode 21 of the stack 41 and the base 62 of the tube 61. More specifically, the wiring 51 is so formed that its one end is in contact with the lower surface (reverse surface) of the second electrode 21. In addition, the wiring 51 is so formed that its other end is in contact with the outer surface of the base 62 through the second insulating layer 63. The wiring 51 is made of a conductive material having a low reactivity to the first solution 81. For example, the wiring 51 is formed by a cable made of a metal material such as Cu, Al, or Ag covered with an insulating material.

### 1-2. Operation Principle of First Embodiment

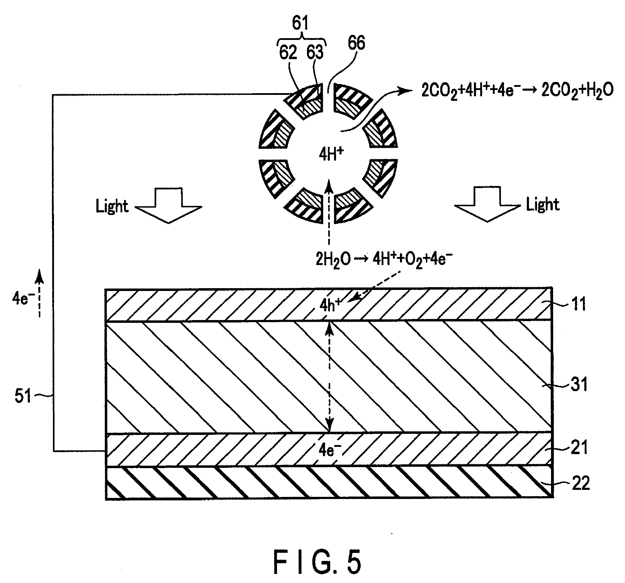

FIG. 5 is a sectional view showing the operation principle of the photoelectrochemical reaction device according to the first embodiment. The operation will be explained by taking, as an example, the polarity when using the photovoltaic layer 31 made of the amorphous silicon-based material shown in FIG. 3. Also, a case in which an absorbed liquid having absorbed CO₂ is used as the second solution 82 will be explained.

As shown in FIG. 5, when light is emitted from above, the emitted light passes through the first electrode 11 and reaches the photovoltaic layer 31. The photovoltaic layer 31 absorbs the light, generates electrons and holes making pairs with the electrons, and separates the electrons and holes. That is, in the photovoltaic layers (the first, second, and third photovoltaic layers 33, 34, and 35), electrons move to the n-type semiconductor layer side (the side of the second electrode 21) due to the built-in potential, and holes generated as pairs of these electrons move to the p-type semiconductor layer side (the side of the first electrode 11), so charge separation occurs. Consequently, the photovoltaic layer 31 generates electromotive force.

The electrons generated in the photovoltaic layer 31 and having moved to the second electrode 21 as a cathode electrode move to the tube 61 (the base 62) through the wiring 51. Then, the electrons are used in a reduction reaction near the inside of the base 62 of the tube. On the other hand, the holes generated in the photovoltaic layer 31 and having moved to the first electrode 11 as an anode electrode are used in an oxidation reaction near the first electrode 11. More specifically, a reaction of formula (1) occurs near the first electrode 11 in contact with the first solution 81, and a reaction of formula (2) occurs near the inside of the base 62 in contact with the second solution 82:

2H₂O → 4H⁺ + O₂ + 4e⁻ ... (1)

2CO₂ + 4H⁺ + 4e⁻ → 2CO + 2H₂O ... (2)

As indicated by formula (1), in the vicinity of the first electrode 11, H₂O contained in the first solution 81 is oxidized (electrons are lost), thereby generating O₂ and H⁺. Then, H⁺ generated on the side of the first electrode 11 moves in the first solution 81 to the inside of the base 62 of the tube 61 (into the second solution 82) through the pores 66 formed in the tube 61.

As indicated by formula (2), in the vicinity of the inside of the base 62 of the tube 61, CO₂ contained in the second solution 82 is reduced (electrons are obtained). More specifically, CO₂ contained in the second solution 82, H⁺ having moved through the pores 66, and the electrons having moved to the base 62 via the second electrode 21 and wiring 51 react with each other, thereby generating CO and H₂O.

In this state, the photovoltaic layer 31 must have an open-circuit voltage equal to or higher than the potential difference between the standard oxidation-reduction potential of the oxidation reaction which occurs on the first electrode 11 and the standard oxidation-reduction potential of the reduction reaction which occurs inside the base 62. For example, the standard oxidation-reduction potential of the oxidation reaction in formula (1) is 1.23 [V], and that of the reduction reaction in formula (2) is -0.1 [V]. Therefore, the open-circuit voltage of the photovoltaic layer 31 must be 1.33 [V] or more. More preferably, the open-circuit voltage must be equal to or higher than a potential difference including an overvoltage. More specifically, when, for example, the overvoltage of the oxidation reaction in formula (1) and that of the reduction reaction in formula (2) are 0.2 [V], the open-circuit voltage is desirably 1.73 [V] or more.

Note that it is possible to cause not only the reduction reaction from CO₂ to CO indicated by formula (2), but also a reduction reaction from CO₂ to, e.g., HCOOH, methane (CH₄), ethylene (C₂H₄), CH₃OH, or ethanol (C₂H₅OH). It is also possible to cause a reduction reaction of H₂O by using the second solution 82, and generate H₂. Furthermore, the CO₂ reduced substance to be generated can be changed by changing the water (H₂O) amount in the solution. For example, it is possible to change the generation ratio of HCOOH, CH₄, CH₃OH, C₂H₅OH, or H₂.

As described above, the tube 61 having the pores 66 is set to face the first electrode 11 which causes the oxidation reaction, and the reduction reaction is caused inside the base 62 of the tube 61. This makes it possible to separate O₂ generated near the first electrode 11, and a carbon compound such as CO generated near the inside of the base 62 of the tube 61. Also, since the tube 61 is set to face the first electrode 11, the moving distance (the distance from the first electrode 11 to the base 62) of H⁺ generated near the first electrode 11 shortens, so the potential loss caused by ion transport can be decreased.

Note that when using the GaAs-based photovoltaic layer 31 shown in FIG. 4, the polarities are opposite to those explained above, so the reactions are also opposite to those explained above. That is, the reduction reaction occurs near the first electrode 11, and the oxidation reaction occurs near the inside of the base 62 of the tube 61.

### 1-3. Effects of First Embodiment

In the photoelectrochemical reaction device according to the aforementioned first embodiment, the photoelectrochemical reaction cell includes the stack 41 including the first electrode 11, photovoltaic layer 31, second electrode 21, and first insulating layer 22, and the tube 61 electrically connected to the second electrode 21 via the wiring 51. This photoelectrochemical reaction cell is accommodated in the solution tank 71 filled with the first solution 81 containing H₂O, and the tube 61 is filled with the second solution 82 containing CO₂.

When light is emitted from above the photoelectrochemical reaction device as described above, the photovoltaic layer 31 generates electromotive force, and an oxidation reaction occurs near the first electrode 11 in contact with the first solution 81. When using H₂O as the first solution 81, the oxidation reaction generates O₂ and H⁺. H⁺ generated by the oxidation reaction diffuses into the tube 61 set above the first electrode 11 so as to face it, and reaches the inside of the base 62 of the tube 61 through the pores 66. Since the base 62 in contact with the second solution 82 is electrically connected to the second electrode 21 of the photovoltaic layer 31, a reduction reaction occurs near the inside of the base 62 due to the electromotive force generated in the photovoltaic layer 31. In this state, H⁺ moved through the pores 66 is used in this reduction reaction near the inside of the base 62. When using a solution having absorbed CO₂ as the second solution 82, the reduction reaction generates CO.

In the first embodiment, the tube 61 having the pores 66 is set above the first electrode 11 so as to face it. Since this shortens the moving distance of H⁺ generated by the oxidation reaction near the first electrode 11 and used in the reduction reaction near the inside of the base 62, the potential loss caused by ion transport can be reduced. Accordingly, it is possible to increase the efficiency of conversion from the sunlight to chemical energy.

Also, since the tube 61 is formed, the oxidation reaction occurs outside the tube 61, and the reduction reaction occurs inside the tube 61. As a consequence, the product (e.g., O₂) of the oxidation reaction can be collected outside the tube 61, and the product (e.g., CO) of the reduction reaction can be collected inside the tube 61. That is, it is possible to separately collect the products of the oxidation reaction and reduction reaction.

### 2. Second Embodiment

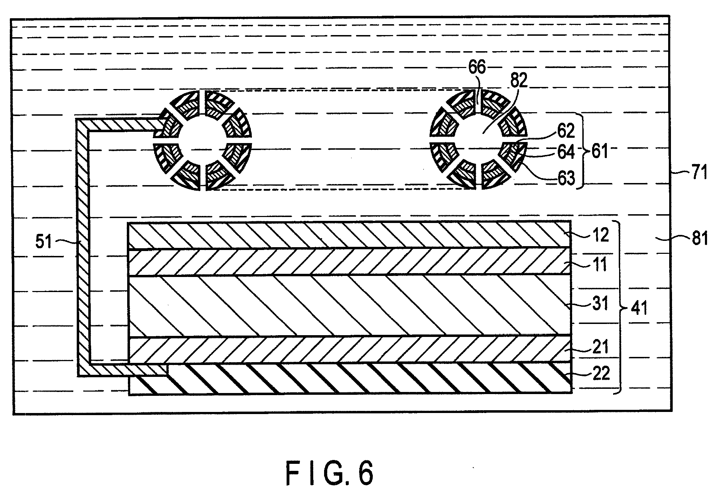

A photoelectrochemical reaction device according to the second embodiment will be explained below with reference to FIG. 6.

The second embodiment is a modification of the first embodiment, and is an example in which a first catalyst layer 12 is formed on a first electrode 11 of a stack 41, and a second catalyst layer 64 is formed on the inner surface of a base 62 of a tube 61. The second embodiment will be explained in detail below.

Note that in the second embodiment, an explanation of the same features as those of the abovementioned embodiment will be omitted, and different features will mainly be explained.

### 2-1. Arrangement of Second Embodiment

FIG. 6 is a sectional view showing the arrangement of the photoelectrochemical reaction device according to the second embodiment.

As shown in FIG. 6, the second embodiment differs from the first embodiment in that the first catalyst layer 12 is formed on the first electrode 11, and the second catalyst layer 64 is formed on the inner surface of the base 62.

The stack 41 includes the first electrode 11, a photovoltaic layer 31, a second electrode 21, a first insulating layer 22, and the first catalyst layer 12. The first catalyst layer 12 is formed on the first electrode 11. The first catalyst layer 12 is formed to increase the chemical reactivity in the vicinity of the first electrode 11. Also, the tube 61 includes the base 62, a second insulating layer 63, and the second catalyst layer 64. The second catalyst layer 64 is formed on the inner surface of the base 62. The second catalyst 64 is formed to increase the chemical reactivity near the inside of the base 62.

When using the photovoltaic layer 31 made of an amorphous silicon-based material as shown in FIG. 3, the first catalyst layer 12 is formed on the anode side and promotes an oxidation reaction. When using an aqueous solution, i.e., H₂O as a first solution 81, the first electrode 11 oxidizes H₂O and generates O₂ and H⁺. Therefore, the first catalyst layer 12 is made of a material which reduces activation energy for oxidizing H₂O. In other words, the first catalyst layer 12 is made of a material which decreases an overvoltage when generating O₂ and H⁺ by oxidizing H₂O. Examples of the material like this are binary metal oxides such as manganese oxide (Mn-O), iridium oxide (Ir-O), nickel oxide (Ni-O), cobalt oxide (Co-O), iron oxide (Fe-O), stannous oxide (Sn-O), indium oxide (In-O), and ruthenium oxide (Ru-O), ternary metal oxides such as Ni-Co-O, Ni-Fe-O, La-Co-O, Ni-La-O, and Sr-Fe-O, quaternary metal oxides such as Pb-Ru-Ir-O and La-Sr-Co-O, and metal complexes such as an Ru complex and Fe complex. Also, the shape of the first catalyst layer 12 is not limited to a thin film, and may also be a lattice, grain, or wire.

Likewise, when using the photovoltaic layer 31 made of an amorphous silicon-based material as shown in FIG. 3, the second catalyst layer 64 is formed on the cathode side and promotes a reduction reaction. When using an absorbed solution having absorbed CO₂ as a second solution 82, the second catalyst layer 64 reduces CO₂ and generates a carbon compound (e.g., CO, HCOOH, CH₄ , CH₃OH, C₂H₅OH, or C₂H₄). Therefore, the second catalyst layer 64 is made of a material which reduces activation energy for reducing CO₂. In other words, the second catalyst layer 64 is made of a material which decreases an overvoltage when generating a carbon compound by reducing CO₂. Examples of the material like this are metals such as Au, Ag, Cu, Pt, C, Ni, Zn, C, graphene, CNT (Carbon NanoTube), fullerene, ketjen black, and Pd, alloys containing at least one of these metals, and metal complexes such as an Ru complex and Re complex. Also, when using an aqueous solution, i.e., H₂O as the second solution 82, the second catalyst 64 reduces H₂O and generates H₂. Therefore, the second catalyst layer 64 is made of a material which reduces activation energy for reducing H₂O. In other words, the second catalyst layer 64 is made of a material which decreases an overvoltage when generating H₂ by reducing H₂O. Examples of the material like this are metals such as Ni, Fe, Pt, Ti, Au, Ag, Zn, Pd, Ga, Mn, Cd, C, and graphene, and alloys containing at least one of these metals. Furthermore, the shape of the second catalyst layer 64 is not limited to a thin film, and may also be a lattice, grain, or wire.

On the other hand, when using the photovoltaic layer 31 made of a GaAs-based material shown in FIG. 4, the polarity of electromotive force and the oxidation-reduction reaction are opposite to those of the case shown in FIG. 3 described above. Therefore, the first catalyst layer 12 is made of a material which promotes the reduction reaction, and the second catalyst layer 64 is made of a material which promotes the oxidation reaction. That is, the materials of the first and second catalyst layers 12 and 64 are switched from those of the case shown in FIG. 3. As described above, the polarity of the photovoltaic layer 31 and the materials of the first and second catalyst layers 12 and 64 are arbitrary. The oxidation-reduction reaction of the first and second catalyst layers 12 and 64 is determined in accordance with the polarity of the photovoltaic layer 31, and each material is selected in accordance with the oxidation-reduction reaction.

In this example, irradiation light reaches the photovoltaic layer 31 through the first catalyst layer 12 in addition to the first electrode 11. Therefore, the first catalyst layer 12 arranged on the light irradiation side of the photovoltaic layer 31 has light transmittance to the irradiation light. More specifically, the light transmittance of the first catalyst layer 12 on the irradiation surface side is desirably at least 10% or more, and more desirably, 30% or more of the irradiation amount of the irradiation light.

It is also possible to form a protective layer (not shown) on the surface of the photovoltaic layer 31 or between the first electrode layer 11 and first catalyst layer 12. The protective layer has conductivity, and prevents corrosion of the photovoltaic layer 31 in the oxidation-reduction reaction. As a consequence, the life of the photovoltaic layer 31 can be prolonged. Also, the protective layer has light transmittance as needed. Examples of the protective layer are dielectric thin films such as TiO₂, ZrO₂, Al₂O₃, SiO₂, and HfO₂. The film thickness of the protective layer is preferably 10 nm or less, and more preferably, 5 nm or less, in order to obtain conductivity by the tunneling effect.

As a method of forming the first and second catalyst layers 12 and 64, it is possible to use a thin film formation method such as sputtering or vapor deposition, or a coating method or electrodeposition method using a solution in which the catalyst material is dispersed.

Note that it is also possible to form only one of the first and second catalyst layers 12 and 64.

### 2-2. Effects of Second Embodiment

In the aforementioned second embodiment, the first catalyst layer 12 is formed on the first electrode 11 of the stack 41, and the second catalyst layer 64 is formed on the inner surface of the base 62 of the tube 61. When compared to the first embodiment, therefore, the overvoltage of the oxidation-reduction reaction can be reduced by the oxidation-reduction reaction promoting effect of the catalyst, so the electromotive force generated by the photovoltaic layer 31 can be used more effectively. Accordingly, the efficiency of conversion from the sunlight to chemical energy can be made higher than that in the first embodiment.

### 3. Third Embodiment

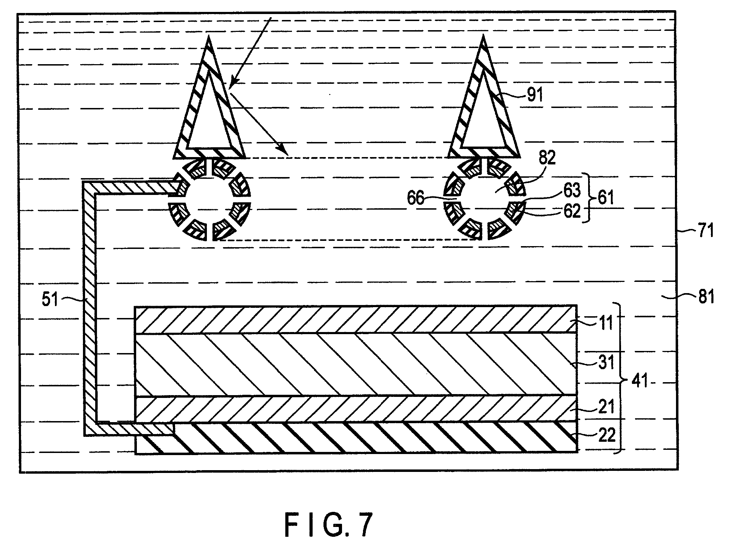

A photoelectrochemical reaction device according to the third embodiment will be explained below with reference to FIGS. 7, 8, and 9.

The third embodiment is a modification of the first embodiment, and is an example in which a reflecting member 91 is formed on a tube 61. The third embodiment will be explained in detail below.

Note that in the third embodiment, an explanation of the same features as those of the abovementioned embodiments will be omitted, and different features will mainly be explained.

### 3-1. Arrangement of Third Embodiment

FIGS. 7, 8, and 9 are sectional views respectively showing arrangements 1, 2, and 3 of the photoelectrochemical reaction device according to the third embodiment.

As shown in FIGS. 7, 8, and 9, the third embodiment differs from the first embodiment in that the reflecting member 91 is formed on the tube 61.

The reflecting member 91 is formed on the tube 61. That is, the reflecting member 91 is formed on the light irradiation side of the tube 61. The reflecting member 91 is desirably formed along the entire surface of the tube 61, but may also be formed partially. The reflecting member 91 is made of a light-transmitting material. Also, the reflecting member 91 has a hollow structure, i.e., a structure into which air can be introduced. In addition, a difference between the refractive index of the material of the reflecting member 91 and that of air is preferably large in order to broaden the angle range of total reflection. More specifically, the refractive index of the material of the reflecting member 91 is 1.2 or more, and preferably, 1.3 or more. An example of the material like this is a resin such as acryl or polycarbonate, or glass. Furthermore, in order to reflect light emitted at an angle not meeting the total reflection conditions, the interior of the hollow structure may also be coated with a metal having a high reflectance such as Al or Ag.

As indicated by structure 1 of FIG. 7, the sectional shape of the reflecting member 91 is a shape which causes reflection or refraction, e.g., a triangle. In structure 1, light emitted from above is totally reflected by the interface between the reflecting member 91 and air inside the reflecting member 91, and can enter a photovoltaic layer 31 through a first electrode 11.

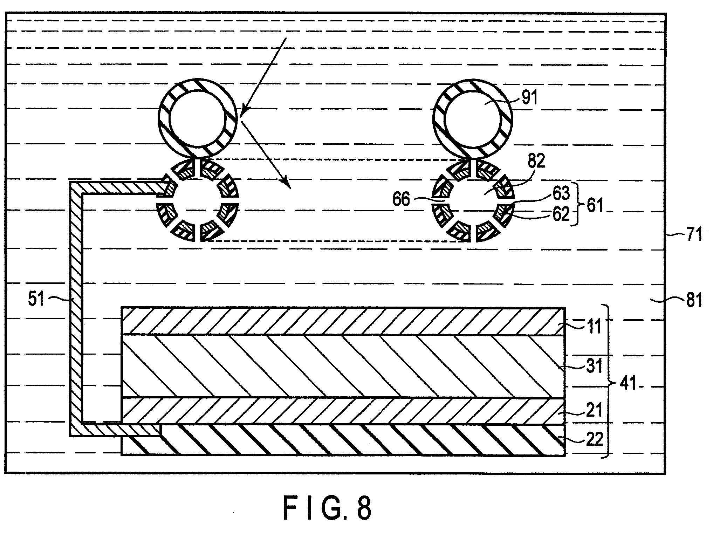

Note that as indicated by structure 2 of FIG. 8, the sectional shape of the reflecting member 91 may also be a circle. In structure 2, light emitted from above is totally reflected by the interface between the reflecting member 91 and air inside the reflecting member 91, and can enter the photovoltaic layer 31 through the first electrode 11, in the same manner as in structure 1.

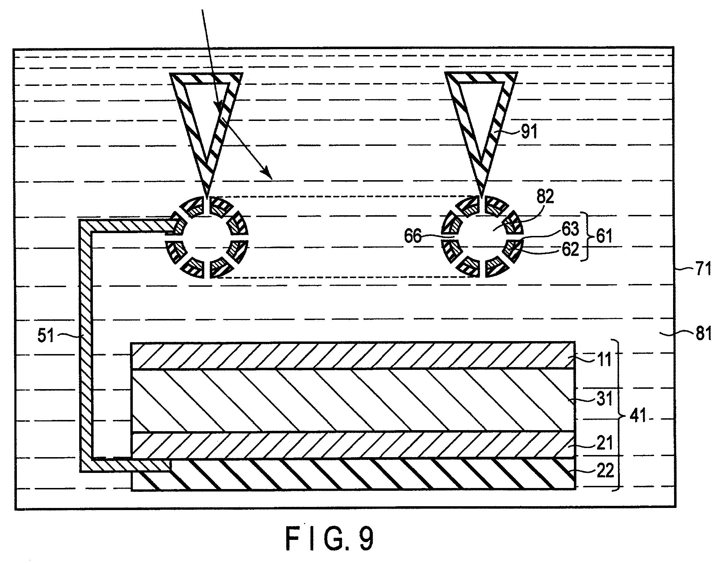

Furthermore, as indicated by structure 3 of FIG. 9, the sectional shape of the reflecting member 91 may also be an inverted triangle. In structure 3, light emitted from above enters the interior (the inside air) of the reflecting member 91. The light having entered the interior is refracted by the interface between the inside air of the reflecting member 91 and the reflecting member 91, and by the interface between the reflecting member 91 and the outside air of the reflecting member 91, and can enter the photovoltaic layer 31 through the first electrode 11.

In structures 1 and 3 (in which the sectional shapes of the reflecting members 91 are a triangle and inverted triangle), a ratio h/w of a height h to a base w is preferably high in order to increase light entering the photovoltaic layer 31. More specifically, h/w is 0.5 or more, and preferably, 1 or more.

### 3-2. Effects of Third Embodiment

In the aforementioned third embodiment, the reflecting member 91 is formed on the tube 61, i.e., on the light irradiation side of the tube 61. Consequently, light entering the tube 61, i.e., light which is intercepted by the tube 61 and cannot enter the photovoltaic layer 31 is reflected (or refracted) by the reflecting member 91. Then, the light reflected (or refracted) by the reflecting member 91 can enter the photovoltaic layer 31. Compared to the first embodiment, therefore, it is possible to increase the light utilization efficiency, and increase the photoelectromotive force to be generated by the photovoltaic layer 31. Accordingly, the efficiency of conversion from the sunlight to chemical energy can be made higher than that of the first embodiment.

### 4. Fourth Embodiment

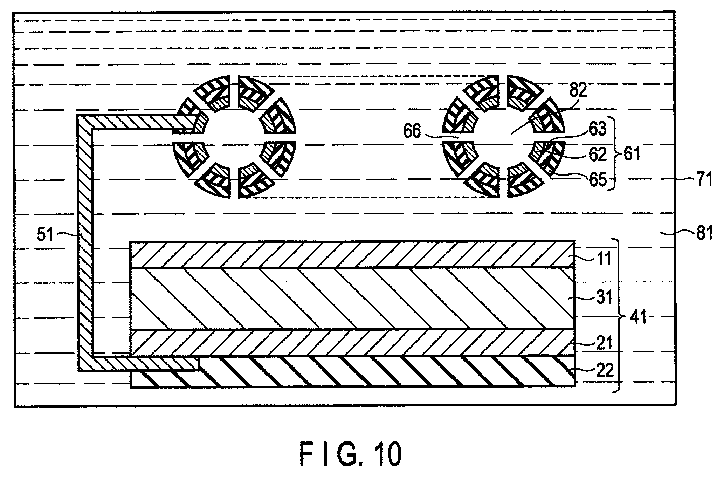

A photoelectrochemical reaction device according to the fourth embodiment will be explained below with reference to FIG. 10.

The fourth embodiment is a modification of the first embodiment, and is an example in which a reflecting layer 65 is formed on the outer surface of a second insulating layer 63 of a tube 61. The fourth embodiment will be explained in detail below.

Note that in the fourth embodiment, an explanation of the same features as those of the abovementioned embodiments will be omitted, and different features will mainly be explained.

### 4-1. Arrangement of Fourth Embodiment

FIG. 10 is a sectional view showing the arrangement of the photoelectrochemical reaction device according to the fourth embodiment.

As shown in FIG. 10, the fourth embodiment differs from the first embodiment in that the reflecting layer 65 is formed on the outer surface of the second insulating layer 63.

The tube 61 includes a base 62, the second insulating layer 63, and the reflecting layer 65. The reflecting layer 65 is formed on the outer surface of the second insulating layer 63. The reflecting layer 65 is formed to prevent the tube 61 from intercepting emitted light. The light reflectance of the reflecting layer 65 is at least 10% or more, preferably, 30% or more, and more preferably, 50% or more. An example of the material like this is a metal such as Al, Ag, Fe, Ni, or Co, or an alloy containing one or more of these elements such as SUS. The reflecting layer 65 may also have a structure in which a plurality of oxide layers such as titanium oxide, aluminum oxide, or magnesium oxide are stacked.

Light emitted from above is reflected by the interface between the reflecting layer 65 and a liquid, and can enter a photovoltaic layer 31 through a first electrode 11.

### 4-2. Effects of Fourth Embodiment

In the aforementioned fourth embodiment, the reflecting layer 65 is formed on the outer surface of the second insulating layer 63 of the tube 61. Consequently, light entering the tube 61, i.e., light which is intercepted by the tube 61 and cannot enter the photovoltaic layer 31 is reflected by the reflecting layer 65. Then, the light reflected by the reflecting layer 65 can enter the photovoltaic layer 31. Compared to the first embodiment, therefore, it is possible to increase the light utilization efficiency, and increase the photoelectromotive force to be generated by the photovoltaic layer 31. Accordingly, the efficiency of conversion from the sunlight to chemical energy can be made higher than that of the first embodiment.

### 5. Fifth Embodiment

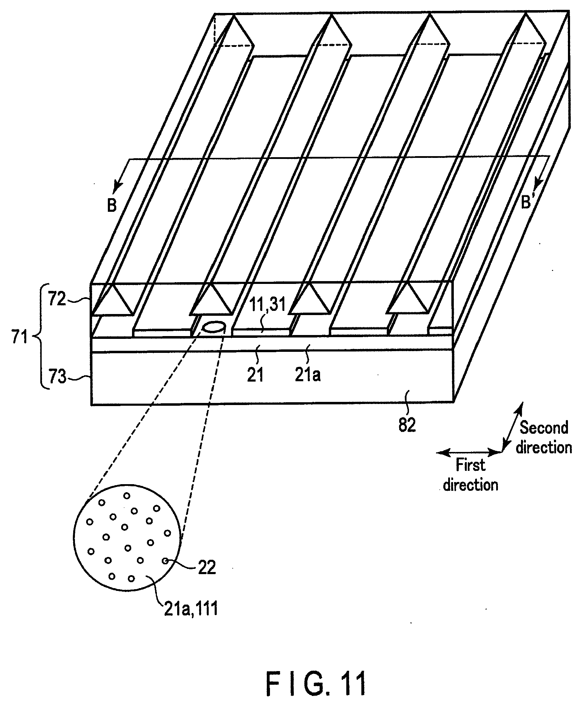

A photoelectrochemical reaction device according to the fifth embodiment will be explained below with reference to FIGS. 11, 12, 13, 14, and 15.

In this photoelectrochemical reaction device according to the fifth embodiment, a photoelectrochemical reaction cell includes a stack 41 including a first electrode 11, photovoltaic layer 31, and second electrode 21, and an ion transmitting member 21a formed adjacent to the stack 41. This photoelectrochemical reaction cell separates a first solution tank 72 filled with a first solution 81 containing H₂O, and a second solution tank 73 filled with a second solution 82 containing CO₂. In addition, reflecting members 101 are arranged on the light incidence side of the ion transmitting member 21a. This makes it possible to separate products of an oxidation-reduction reaction. It is also possible to increase the efficiency of conversion from the sunlight to chemical energy. The fifth embodiment will be explained in detail below.

Note that in the fifth embodiment, an explanation of the same features as those of the abovementioned embodiments will be omitted, and different features will mainly be explained.

### 5-1. Arrangement of Fifth Embodiment

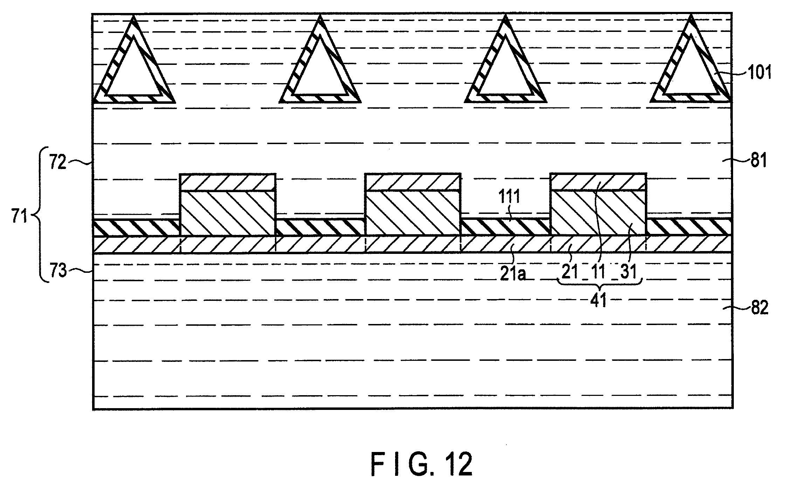

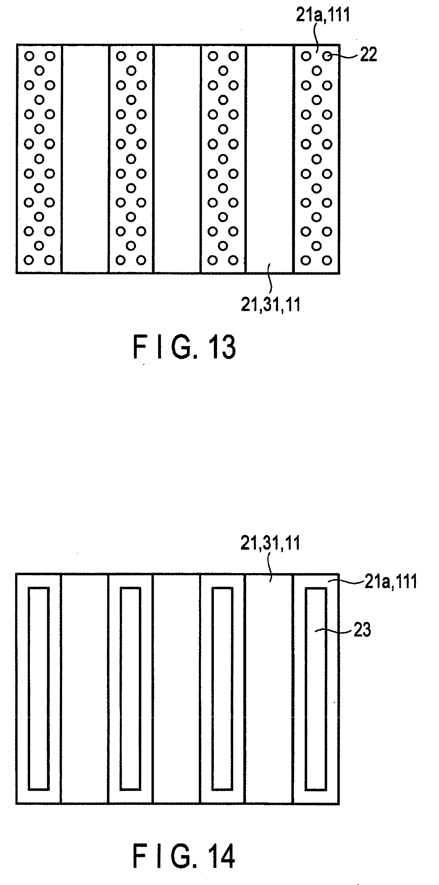

FIG. 11 is a perspective view showing the arrangement of the photoelectrochemical reaction device according to the fifth embodiment. FIG. 12 is a sectional view showing the arrangement of the photoelectrochemical reaction device according to the fifth embodiment, and taken along a wiring B - B' in FIG. 11. FIG. 13 is a plan view showing an example of the arrangement of the photoelectrochemical reaction device according to the fifth embodiment. FIG. 14 is a plan view showing another example of the arrangement of the photoelectrochemical reaction device according to the fifth embodiment.

As shown in FIGS. 11 and 12, the photoelectrochemical reaction device according to the fifth embodiment includes the photoelectrochemical reaction cell including the stack 41 and ion transmitting member 21a, the reflecting member 101, and a solution tank 71 accommodating the photoelectrochemical reaction cell and reflecting member 101.

The solution tank 71 accommodates the photoelectrochemical reaction cell and reflecting member 101. The solution tank 71 includes the first and second solution tanks 72 and 73 separated by the photoelectrochemical reaction cell.

The first solution tank 72 contains the first solution 81 so that the first electrode 11 of the photoelectrochemical reaction cell and the reflecting member 101 are immersed. The first solution 81 is, e.g., a solution containing H₂O. An example of the solution like this is a solution containing an arbitrary electrolyte, and is desirably a solution which promotes an oxidation reaction of H₂O. A window made of, e.g., glass or acryl having a high light transmittance is formed in the upper surface of the first solution tank 72. Irradiation light is emitted from above the first solution tank 72. The photoelectrochemical reaction cell (to be described later) causes an oxidation-reduction reaction by this irradiation light.

An injection port and collection port (not shown) are connected to the first solution tank 72. The injection port injects a solution (the first solution 81) to be used in an oxidation reaction in the first solution tank 72. The collection port collects a gas (e.g., O₂) produced by the oxidation reaction in the first solution tank 72.

The second solution tank 73 contains the second solution 82 so that the second electrode 21 of the photoelectrochemical reaction cell is immersed. The second solution 82 is, e.g., a solution containing CO₂. The second solution 10 desirably has a high CO₂ absorptivity, and examples of a solution containing H₂O are aqueous solutions of NaHCO₃ and KHCO₃. The first and second solutions 81 and 82 can be the same solution, but different solutions can also be as the first and second solutions 81 and 82 because the second solution 82 preferably has a high CO₂ absorptivity. In addition, the second solution 82 desirably contains a CO₂ absorbent which reduces the reduction potential of CO₂, increases the ion conductivity, and absorbs CO₂. An example of an electrolyte solution like this is an ion liquid which is made of a salt containing a cation such as an imidazolium ion or pyridinium ion and an anion such as BF⁴⁻ or PF⁶⁻, and is in a liquid state over a broad temperature range, or an aqueous solution of this ion liquid. Another example of the electrolyte solution is an amine solution such as ethanolamine, imidazole, or pyridine, or an aqueous solution of this amine solution. Amine can be any of primary amine, secondary amine, and tertiary amine. Examples of primary amine are methylamine, ethylamine, propylamine, butylamine, pentylamine, and hexylamine. Hydrocarbon of amine may be substituted with alcohol or halogen. Examples of amine in which hydrocarbon is substituted are methanolamine, ethanolamine, and chloromethylamine. An unsaturated bond may also exist. These hydrocarbons similarly apply to secondary amine and tertiary amine. Examples of secondary amine are dimethylamine, diethylamine, dipropylamine, dibutylamine, dipentylamine, dihexylamine, dimethanolamine, diethanolamine, and dipropanolamine. Substituted hydrocarbons may also be different. This similarly applies to tertiary amine. Examples of amines having different hydrocarbons are methylethylamine and methylpropylamine. Examples of tertiary amine are trimethylamine, triethylamine, tripropylamine, tributylamine, trihexylamine, trimethanolamine, triethanolamine, tripropanolamine, tributanolamine, tripropanolamine, triexanolamine, methyldiethylamine, and methyldipropylamine. Examples of the cation of the ion liquid are a 1-ethyl-3-methylimidazolium ion, 1-methyl-3-propylimidazolium ion, 1-butyl-3-methylimidazol ion, 1-methyl-3-pentylimidazolium ion, and 1-hexyl-3-methylimidazolium ion. The 2-position of the imidazolium ion may also be substituted. Examples of the imidazolium ion in which the 2-position is substituted are a 1-ethyl-2,3-dimethylimidazolium ion, 1,2-dimethyl-3-propylimidazolium ion, 1-butyl2,3-dimethylimidazolium ion, 1,2-dimethyl-3-pentylimidazolium ion, and 1-hexyl-2,3-dimethylimidazolium ion. Examples of the pyridinium ion are methylpyridinium, ethylpyridinium, propylpyridinium, butylpyridinium, pentylpyridinium, and hexylpyridinium. In both the imidazolinium ion and pyridinium ion, an alkyl group may be substituted, and an unsaturated bond may exist. Examples of the anion are a fluoride ion, a chloride ion, a bromide ion, an iodide ion, BF⁴⁻, PF⁶⁻, CF₃COO⁻, CF₃SO³⁻, NO³⁻, SCN⁻, (CF₃SO₂)₃C⁻, bis(trifluoromethoxysulfonyl)imide, bis(trifluoromethoxysulfonyl)imide, and bis(perfluoroethylsulfonyl)imide. It is also possible to use a zweitterion obtained by coupling the cation and anion of the ion liquid by hydrocarbon.

An injection port and collection port (not shown) are connected to the second solution tank 73.. The injection port injects a liquid (the second solution 82) to be used in a reduction reaction in the second solution tank 73. The collection port collects a gas (e.g., CO) produced by the reduction reaction in the second solution tank 73.

The photoelectrochemical reaction cell includes the stack 41 and ion transmitting member 21a, and generates chemical energy from light energy. Each element of the photoelectrochemical reaction cell will be explained in detail below.

The stack 41 includes the first electrode 11, photovoltaic layer 31, and second electrode 21. A plurality of stacks 41 extend parallel in the second direction. The stacks 41 are sequentially formed by using the second electrode 21 as a base.

The second electrode 21 is arranged on the side of the second solution tank 73 and accommodated in the second solution tank 73. The second electrode 21 is conductive. Also, the second electrode 21 is formed to support the stack 41 and increase its mechanical strength. The second electrode 21 is formed by a metal plate made of, e.g., Cu, Al, Ti, Ni, Fe, or Ag, or an alloy plate containing at least one of these metals, e.g., SUS. The second electrode 21 may also be formed by a conductive resin or the like. Furthermore, the second electrode 21 is formed by a semiconductor substrate such as Si or Ge, or an ion-exchange membrane. The second electrode 21 is adjacent to the ion transmitting member 21a (to be described later) in the first direction, and integrated with the ion transmitting member 21a.

The photovoltaic layer 31 is formed on the second electrode 21. The photovoltaic layer 31 causes charge separation in accordance with light in each wavelength region. That is, holes are separated to the anode side (obverse surface side), and electrons are separated to the cathode side (reverse surface side). Thus, the photovoltaic layer 31 generates electromotive force.

The first electrode 11 is arranged on the side of the first solution tank 72, and accommodated in the first solution tank 72. The first electrode 11 is formed on the photovoltaic layer 31. The first electrode 11 is made of a metal such as Ag, Au, Al, or Cu, or an alloy containing at least one of these metals. The first electrode 11 may also be made of a transparent conductive oxide such as ITO, ZnO, FTO, AZO, or ATO. Furthermore, the first electrode 11 may be formed by a structure in which a metal and transparent conductive oxide are stacked, a structure in which a metal and another conductive material are compounded, or a structure in which a transparent conductive oxide and another conductive material are compounded.

In this example, irradiation light reaches the photovoltaic layer 31 through the first electrode 11. Therefore, the first electrode 11 arranged on the light irradiation side (the upper side in the drawing) has light transmittance to the irradiation light. More specifically, the light transmittance of the first electrode 11 on the light irradiation side is preferably at least 10% or more, and more preferably, 30% or more of the irradiation amount of the irradiation light. Alternatively, the first electrode 11 has an aperture capable of transmitting light. The aperture ratio is preferably at least 10% or more, and more preferably, 30% or more.

The ion transmitting member 21a is adjacent to the second electrode 21 of the stack 41 in the first direction, and integrated with the second electrode 21. In other words, the ion transmitting member 21a is formed to continue to the second electrode 21. That is, the ion transmitting member 21a is formed by exposing the second electrode 21 by patterning the first electrode 11 and photovoltaic layer 31 in the stack 41. The ion transmitting member 21a is formed between two stacks 41 adjacent to each other in the first direction. That is, the ion transmitting members 21a and stacks 41 are alternately formed along the first direction. The ion transmitting members 21a and stacks 41 (second electrodes 21) physically separate the first and second solution tanks 72 and 73. Also, the ion transmitting members 21a selectively transmit ions from the first solution 81 to the second solution 82 through pores 22 or slits 23 (to be described later).

A third insulating layer 111 is formed on the surface of the ion transmitting member 21a, which faces the first solution tank 72. The third insulating layer 111 is formed to electrically insulate the first solution 81 and ion transmitting member 21a. The third insulating layer 111 is made of a metal oxide such as TiOₓ or Al₂O₃ having a low reactivity to the first solution 81, or a resin of an organic compound.

As shown in FIG. 13, the ion transmitting member 21a and third insulating layer 111 have a plurality of pores 22 extending from the obverse surfaces to the reverse surfaces of the ion transmitting member 21a and third insulating layer 111. The pores 22 selectively pass ions (e.g., H ions (H⁺)) generated by an oxidation reaction on the first electrode 11 in the first solution tank 72 to the second solution tank 73. The ions having passed through the pores 22 are converted into, e.g., O₂, H₂, or an organic compound by the reduction reaction on the second electrode 21 of the second solution tank 73.

The pores 22 need only have a size through which ions pass. For example, the lower limit of the diameter (equivalent circle diameter) of the pores 22 is preferably 0.3 nm or more. Also, an area ratio S1/S2 of a total area S1 of the plurality of pores 22 to an area S2 of the ion transmitting member 21a is 0.9 or less, and preferably, 0.6 or less, so as not to decreases the mechanical strength. The shape of the pores 22 is not limited to a circle, and may also be an ellipse, triangle, or square. The layout of the pores 22 is not limited to a square matrix, and may also be a triangular matrix or random. The pores 22 may also be filled with an ion-exchange membrane. Examples of the ion-exchange membrane are a cation-exchange membrane such as Nafion or Flemion, and an anion-exchange membrane such as Neosepta or Selemion. Furthermore, the pores 22 may be filled with a glass filter or agar-agar.

Note that as shown in FIG. 14, the ion transmitting members 21a and third insulating layers 111 may also have a plurality of slits 23 extending from the obverse surfaces to the reverse surfaces of the ion transmitting members 21a and third insulating layers 111, and filled with an ion-exchange membrane. The slits 23 selectively pass only ions (e.g., H ions (H⁺)) generated by the oxidation reaction on the first electrode 11 in the first solution tank 72 to the second solution tank 73.

The reflecting member 101 is formed immediately above the ion transmitting member 21a. That is, the reflecting member 101 is formed on the light irradiation side of the ion transmitting member 21a, and overlaps the ion transmitting member 21a. Accordingly, the dimension of the reflecting member 101 in the first direction is equivalent to that of the ion transmitting member 21a. The reflecting member 101 is desirably formed along the entire surface of the ion transmitting member 21a, but may also be formed partially.

The reflecting member 101 is made of a light-transmitting material. Also, the reflecting member 101 has a hollow structure, i.e., a structure into which air can be introduced. In addition, a difference between the refractive index of the material of the reflecting member 101 and that of air is preferably large in order to broaden the angle range of total reflection. More specifically, the refractive index of the material of the reflecting member 101 is 1.2 or more, and preferably, 1.3 or more. An example of the material like this is a resin such as acryl or polycarbonate, or glass. Furthermore, in order to reflect light emitted at an angle not meeting the total reflection conditions, the interior of the hollow structure may also be coated with a metal having a high reflectance such as Al or Ag.

The sectional shape of the reflecting member 101 is a shape which causes reflection or refraction, e.g., a triangle. However, the present invention is not limited to this, and the sectional shape of the reflecting member 101 may also be a circle or inverted triangle. The reflecting member 101 can reflect or refract light emitted from above, so the light can enter the photovoltaic layer 31 through the first electrode 11.

Also, when the sectional shapes of the reflecting members 101 are a triangle and inverted triangle, a ratio h/w of a height h to a base w is preferably high in order to increase light entering the photovoltaic layer 31. More specifically, h/w is 0.5 or more, and preferably, 1 or more.

### 5-2. Operation Principle of Fifth Embodiment

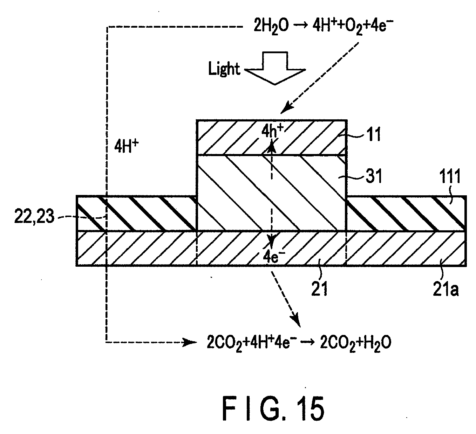

FIG. 15 is a sectional view showing the operation principle of the photoelectrochemical reaction device according to the fifth embodiment. The operation will be explained by taking, as an example, the polarity when using the photovoltaic layer 31 made of the amorphous silicon-based material shown in FIG. 3. Also, a case in which an absorbed liquid having absorbed CO₂ is used as the second solution 82 will be explained.

As shown in FIG. 15, when light is emitted from above, the emitted light passes through the first electrode 11 and reaches the photovoltaic layer 31. The photovoltaic layer 31 absorbs the light, generates electrons and holes making pairs with the electrons, and separates the electrons and holes. That is, in the photovoltaic layer 31, electrons move to the side of the second electrode 21 due to the built-in potential, and holes generated as pairs of these electrons move to the side of the first electrode 11, so charge separation occurs. Consequently, the photovoltaic layer 31 generates electromotive force.

The electrons generated in the photovoltaic layer 31 and having moved to the second electrode 21 as a cathode electrode are used in a reduction reaction near the second electrode 21. On the other hand, the holes generated in the photovoltaic layer 31 and having moved to the first electrode 11 as an anode electrode are used in an oxidation reaction near the first electrode 11. More specifically, the reaction of formula (1) occurs near the first electrode 11 in contact with the first solution 81, and the reaction of formula (2) occurs near the second electrode 21 in contact with the second solution 82.

As indicated by formula (1), in the vicinity of the first electrode 11, H₂O contained in the first solution 81 is oxidized (electrons are lost), thereby generating O₂ and H⁺. Then, H⁺ generated on the side of the first electrode 11 moves in the first solution 81 to the second solution tank 73 through the pores 22 (or the slit 23) of the ion transmitting member 21a and third insulating layer 111.

As indicated by formula (2), in the vicinity of the second electrode 21, CO₂ contained in the second solution 82 is reduced (electrons are obtained). More specifically, CO₂ contained in the second solution 82, H⁺ having moved through the pores 22 (or the slit 23), and the electrons having moved to the second electrode 21 react with each other, thereby generating CO and H₂O.

Note that when using the GaAs-based photovoltaic layer 31 shown in FIG. 4, the polarities are opposite to those explained above, so the reactions are also opposite to those explained above. That is, the reduction reaction occurs near the first electrode 11, and the oxidation reaction occurs near the inside of the base 62 of the tube 61.

### 5-3. Effects of Fifth Embodiment

In the photoelectrochemical reaction device according to the aforementioned fifth embodiment, the photoelectrochemical reaction cell includes the stack 41 including the first electrode 11, photovoltaic layer 31, and second electrode 21, and the ion transmitting member 21a formed adjacent to the stack 41. This photoelectrochemical reaction cell separates the solution tank 72 filled with the first solution 81 containing H₂O, and the second solution tank 73 filled with the second solution 82 containing CO₂. In addition, the reflecting member 101 is arranged on the light incidence side of the ion transmitting member 21a.

When light is emitted from above the photoelectrochemical reaction device as described above, the photovoltaic layer 31 generates electromotive force, and an oxidation reaction occurs near the first electrode 11 in contact with the first solution 81. When using H₂O as the first solution 81, the oxidation reaction generates O₂ and H⁺. H⁺ generated by the oxidation reaction diffuses to the ion transmitting member 21a, and reaches the second electrode 21 in the second solution tank 73 through the pores 22 (or the slit 23). A reduction reaction occurs near the second electrode 21 in contact with the second solution 82 due to the electromotive force generated by the photovoltaic layer 31. In this state, H⁺ moved through the pores 22 (or the slit 23) is used in this reduction reaction near the second electrode 21. When using a solution having absorbed CO₂ as the second solution 82, the reduction reaction generates CO.

In the fifth embodiment, H⁺ to be used in the reduction reaction of the second electrode 21 can be moved through the pores 22 (or the slit 23) of the ion transmitting member 21a. This makes it possible to increase the efficiency of conversion from the sunlight to chemical energy.

Also, since the stacks 41 separate the solution tank 71, the oxidation reaction occurs in the first solution tank 72, and the reduction reaction occurs in the second solution tank 73. As a consequence, the product (e.g., O₂) of the oxidation reaction can be collected in the first solution tank 72, and the product (e.g., CO) of the reduction reaction can be collected in the second solution tank 73. That is, it is possible to separately collect the products of the oxidation reaction and reduction reaction.

Furthermore, the reflecting member 101 is formed above the ion transmitting member 21a, i.e., the reflecting member 101 is formed at the light irradiation side of the ion transmitting member 21a. Accordingly, light entering the ion transmitting member 21a, i.e., light unable to enter the photovoltaic layer 31 is reflected (or refracted) by the reflecting member 101. Then, the light reflected (or refracted) by the reflecting member 101 can enter the photovoltaic layer 31. Since this increases the light utilization efficiency, the photoelectromotive force to be generated by the photovoltaic layer 31 can be improved. Therefore, the efficiency of conversion from the sunlight to chemical energy can be increased.

### 6. Sixth Embodiment

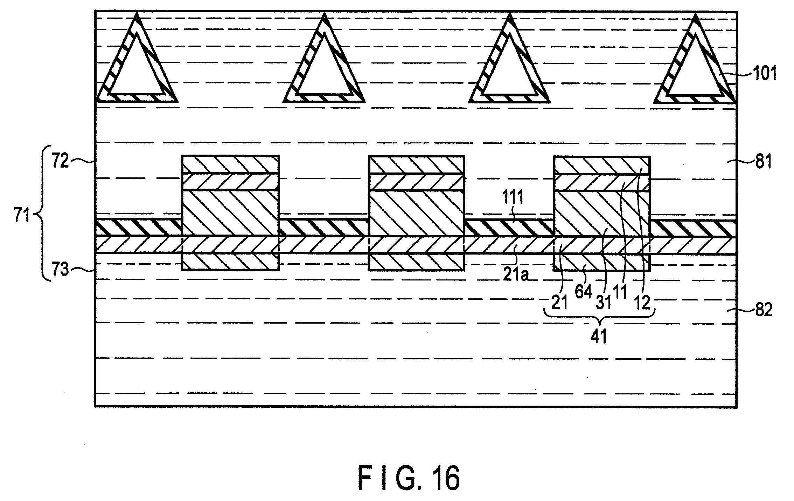

A photoelectrochemical reaction device according to the sixth embodiment will be explained below with reference to FIG. 16.

The sixth embodiment is a modification of the fifth embodiment, and is an example in which a first catalyst layer 12 is formed on the obverse surface (upper surface) of a first electrode 11, and a second catalyst layer 64 is formed on the reverse surface (lower surface) of a second electrode 21. The sixth embodiment will be explained in detail below.

Note that in the sixth embodiment, an explanation of the same features as those of the abovementioned embodiments will be omitted, and different features will mainly be explained.

### 6-1. Arrangement of Sixth Embodiment

FIG. 16 is a sectional view showing the arrangement of the photoelectrochemical reaction device according to the sixth embodiment.

As shown in FIG. 16, the sixth embodiment differs from the fifth embodiment in that the first catalyst layer 12 is formed on the first electrode 11, and the second catalyst layer 64 is formed on the inner surface of a base 62.

A stack 41 includes the first electrode 11, a photovoltaic layer 31, the second electrode 21, the first catalyst layer 12, and the second catalyst layer 64. The first catalyst layer 12 is formed on the first electrode 11. The first catalyst layer 12 is formed to increase the chemical reactivity in the vicinity of the first electrode 11. The second catalyst layer 64 is formed on the reverse surface of the second electrode 21. The second catalyst layer 64 is formed to increase the chemical reactivity in the vicinity of the second electrode 21.

When using the photovoltaic layer 31 made of an amorphous silicon-based material as shown in FIG. 3, the first catalyst layer 12 is formed on the anode side and promotes an oxidation reaction. When using an aqueous solution, i.e., H₂O as a first solution 81, the first electrode 11 oxidizes H₂O and generates O₂ and H⁺. Therefore, the first catalyst layer 12 is made of a material which reduces activation energy for oxidizing H₂O. In other words, the first catalyst layer 12 is made of a material which decreases an overvoltage when generating O₂ and H⁺ by oxidizing H₂O. Examples of the material like this are binary metal oxides such as manganese oxide (Mn-O), iridium oxide (Ir-O), nickel oxide (Ni-O), cobalt oxide (Co-O), iron oxide (Fe-O), stannous oxide (Sn-O), indium oxide (In-O), and ruthenium oxide (Ru-O), ternary metal oxides such as Ni-Co-O, Ni-Fe-O, La-Co-O, Ni-La-O, and Sr-Fe-O, quaternary metal oxides such as Pb-Ru-Ir-O and La-Sr-Co-O, and metal complexes such as an Ru complex and Fe complex. Also, the shape of the first catalyst layer 12 is not limited to a thin film, and may also be a lattice, grain, or wire.

Likewise, when using the photovoltaic layer 31 made of an amorphous silicon-based material as shown in FIG. 3, the second catalyst layer 64 is formed on the cathode side and promotes a reduction reaction. When using an absorbed solution having absorbed CO₂ as a second solution 82, the second catalyst layer 64 reduces CO₂ and generates a carbon compound (e.g., CO, HCOOH, CH₄, CH₃OH, C₂H₅OH, or C₂H₄). Therefore, the second catalyst layer 64 is made of a material which reduces activation energy for reducing CO₂. In other words, the second catalyst layer 64 is made of a material which decreases an overvoltage when generating a carbon compound by reducing CO₂. Examples of the material like this are metals such as Au, Ag, Cu, Pt, C, Ni, Zn, C, graphene, CNT, fullerene, ketjen black, and Pd, alloys containing at least one of these metals, and metal complexes such as an Ru complex and Re complex. Also, when using an aqueous solution, i.e., H₂O as the second solution 82, the second catalyst 64 reduces H₂O and generates H₂. Therefore, the second catalyst layer 64 is made of a material which reduces activation energy for reducing H₂O. In other words, the second catalyst layer 64 is made of a material which decreases an overvoltage when generating H₂ by reducing H₂O. Examples of the material like this are metals such as Ni, Fe, Pt, Ti, Au, Ag, Zn, Pd, Ga, Mn, Cd, C, and graphene, and alloys containing at least one of these metals. Furthermore, the shape of the second catalyst layer 64 is not limited to a thin film, and may also be a lattice, grain, or wire.

On the other hand, when using the photovoltaic layer 31 made of a GaAs-based material shown in FIG. 4, the polarity of electromotive force and the oxidation-reduction reaction are opposite to those of the case shown in FIG. 3 described above. Therefore, the first catalyst layer 12 is made of a material which promotes the reduction reaction, and the second catalyst layer 64 is made of a material which promotes the oxidation reaction. That is, the materials of the first and second catalyst layers 12 and 64 are switched from those of the case shown in FIG. 3. As described above, the polarity of the photovoltaic layer 31 and the materials of the first and second catalyst layers 12 and 64 are arbitrary. The oxidation-reduction reaction of the first and second catalyst layers 12 and 64 is determined in accordance with the polarity of the photovoltaic layer 31, and each material is selected in accordance with the oxidation-reduction reaction.

In this example, irradiation light reaches the photovoltaic layer 31 through the first catalyst layer 12 in addition to the first electrode 11. Therefore, the first catalyst layer 12 arranged on the light irradiation side of the photovoltaic layer 31 has light transmittance to the irradiation light. More specifically, the light transmittance of the first catalyst layer 12 on the irradiation surface side is desirably at least 10% or more, and more desirably, 30% or more of the irradiation amount of the irradiation light.

It is also possible to form a protective layer (not shown) on the surface of the photovoltaic layer 31 or between the first electrode layer 11 and first catalyst layer 12. The protective layer has conductivity, and prevents corrosion of the photovoltaic layer 31 in the oxidation-reduction reaction. As a consequence, the life of the photovoltaic layer 31 can be prolonged. Also, the protective layer has light transmittance as needed. Examples of the protective layer are dielectric thin films such as TiO₂, ZrO₂, Al₂O₃, SiO₂, and HfO₂. The film thickness of the protective layer is preferably 10 nm or less, and more preferably, 5 nm or less, in order to obtain conductivity by the tunneling effect.

As a method of forming the first and second catalyst layers 12 and 64, it is possible to use a thin film formation method such as sputtering or vapor deposition, or a coating method or electrodeposition method using a solution in which the catalyst material is dispersed.

Note that it is also possible to form only one of the first and second catalyst layers 12 and 64.

### 6-2. Effects of Sixth Embodiment

In the aforementioned sixth embodiment, the first catalyst layer 12 is formed on the first electrode 11, and the second catalyst layer 64 is formed on the reverse surface of the second electrode 21. When compared to the fifth embodiment, therefore, the overvoltage of the oxidation-reduction reaction can be reduced by the oxidation-reduction reaction promoting effect of the catalyst, so the electromotive force generated by the photovoltaic layer 31 can be used more effectively. Accordingly, the efficiency of conversion from the sunlight to chemical energy can be made higher than that in the fifth embodiment.

### 7. Seventh Embodiment

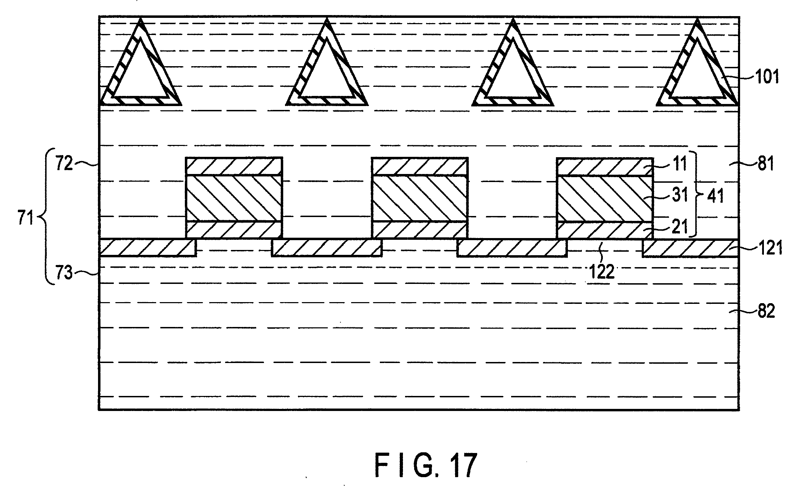

A photoelectrochemical reaction device according to the seventh embodiment will be explained below with reference to FIG. 17.

The seventh embodiment is a modification of the fifth embodiment, and is an example in which a photoelectrochemical reaction cell includes a stack 41 including a first electrode 11, photovoltaic layer 31, and second electrode 21, and a support substrate 121 having a slit 122. The seventh embodiment will be explained in detail below.

Note that in the seventh embodiment, an explanation of the same features as those of the abovementioned embodiments will be omitted, and different features will main be explained.

### 7-1. Arrangement of Seventh Embodiment

FIG. 17 is a sectional view showing the arrangement of the photoelectrochemical reaction device according to the seventh embodiment.

As shown in FIG. 17, the seventh embodiment differs from the fifth embodiment in that the photoelectrochemical reaction cell includes the stack 41 including the first electrode 11, photovoltaic layer 31, and second electrode 21, and the support substrate 121 having the slit 122, and the stack 41 is so formed as to cover the slit 122.

The photoelectrochemical reaction cell includes the stack 41 and support substrate 121.

The support substrate 121 is formed between first and second solution tanks 72 and 73. The support substrate 121 has a plurality of slits 122 extending from the obverse surface to the reverse surface of the support substrate 121, in order to transmit ions. The support substrate 121 has a high mechanical strength, and is made of a metal plate, e.g., Cu, Al, Ti, Ni, Fe, or Ag, or an alloy plate containing at least one of these metals, e.g., SUS. The support substrate 121 and second electrode are electrically insulated so as not to cause any chemical reaction near the support substrate 121. Therefore, an insulating layer (not shown) is formed between the support substrate 121 and second electrode. Alternatively, the obverse surface of the support substrate 121 may be covered with an insulating layer. Furthermore, the support substrate 121 may be made of a resin or the like. The support substrate 121 may also be formed by an ion-exchange membrane.

The stack 41 includes the first electrode 11, photovoltaic layer 31, and second electrode 21. The stack 41 is formed on the obverse surface of the support substrate 121, so as to cover the slit 122. Therefore, the first and second solution tanks 72 and 73 can physically be separated by the stack 41 and support substrate 121. Also, the second electrode 21 is desirably electrically insulated from a first solution 81. Accordingly, an insulating layer (not shown) is formed in a region (e.g., on a side surface of the second electrode 21) where the second electrode 21 and first solution 81 are in contact with each other.

In this state, the first electrode 11 is in contact with the first solution 81, and the second electrode 21 is in contact with a second solution 82 through the slit 122. Consequently, an oxidation reaction of, e.g., H₂O contained in the first solution 81 occurs near the first electrode 11, and a reduction reaction of, e.g., CO₂ contained in the second solution 82 occurs near the second electrode 21.

Also, a plurality of pores (not shown) extending from the obverse surface to the reverse surface of the support substrate 121 are formed in an exposed region (a region where the stack 41 is not formed). These pores selectively pass only ions (e.g., H ions (H⁺)) generated by the oxidation reaction of the first electrode 11 in the first solution tank 72 to the second solution tank 73. The ions having passed through the pores are converted into, e.g., O₂, H₂, or an organic compound by the reduction reaction of the second electrode 21 in the second solution tank 73.

The pores need only have a size through which ions pass. For example, the lower limit of the diameter (equivalent circle diameter) of the pores is preferably 0.3 nm or more. Also, an area ratio S1/S2 of a total area S1 of the plurality of pores 22 to an area S2 of an ion transmitting member 21a is 0.9 or less, and preferably, 0.6 or less, so as not to decreases the mechanical strength. The shape of the pores is not limited to a circle, and may also be an ellipse, triangle, or square. The layout of the pores is not limited to a square matrix, and may also be a triangular matrix or random. The pores may also be filled with an ion-exchange membrane. Examples of the ion-exchange membrane are a cation-exchange membrane such as Nafion or Flemion, and an anion-exchange membrane such as Neosepta or Selemion. Furthermore, the pores may be filled with a glass filter or agar-agar.

Note that a plurality of slits (not shown) extending from the obverse surface to the reverse surface of the support substrate 121 and filled with an ion-exchange membrane may also be formed in the exposed region of the support substrate 121. These slits selectively pass only ions (e.g., H ions (H⁺)) generated by the oxidation reaction of the first electrode 11 in the first solution tank 72 to the second solution tank 73.

When the support substrate 121 itself is formed by an ion-exchange membrane, the pores and slits in the exposed region are unnecessary.

Furthermore, it is also possible to arrange a plurality of support substrates 121 into a wiring and space pattern, instead of forming the slits 122 in the support substrate 121. In this case, the stacks 41 are arranged on the support substrate 121 so as to cover the space regions of the plurality of support substrates 121.

### 7-2. Effects of Seventh Embodiment

In the aforementioned seventh embodiment, the photoelectrochemical reaction cell includes the stack 41 including the first electrode 11, photovoltaic layer 31, and second electrode 21, and the support substrate 121 having the slits 122, and the stack 41 is formed to cover the slit 122. The stacks 41 and support substrate 121 separate the first and second solution tanks 72 and 73. This can achieve the same effects as those of the fifth embodiment.

### 8. Eighth Embodiment

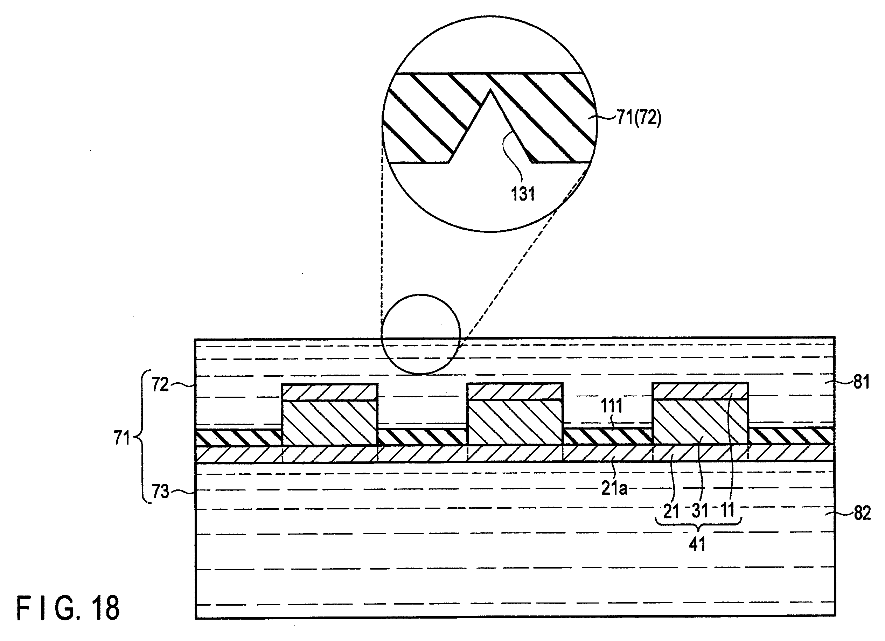

A photoelectrochemical reaction device according to the eighth embodiment will be explained below with reference to FIG. 18.

The eighth embodiment is a modification of the fifth embodiment, and is an example in which a wedge-shaped recess is formed inside the upper-surface portion of a first solution tank 72, instead of the reflecting member 101. The eighth embodiment will be explained in detail below.

Note that in the eighth embodiment, an explanation of the same features as those of the abovementioned embodiments will be omitted, and different features will mainly be explained.

### 8-1. Arrangement of Eighth Embodiment

FIG. 18 is a sectional view showing the arrangement of the photoelectrochemical reaction device according to the eighth embodiment.

As shown in FIG. 18, the eighth embodiment differs from the fifth embodiment in that a wedge-shaped recess 131 is formed inside the upper-surface portion of the first solution tank 72, instead of the reflecting member 101.

The recess 131 is formed immediately above an ion transmitting member 21a. That is, the recess 131 is formed on the light irradiation side of the ion transmitting member 21a, and overlaps the ion transmitting member 21a. Therefore, the dimension of the recess 131 in the first direction is equivalent to that of the ion transmitting member 21a. The recess 131 is desirably formed along the entire surface of the ion transmitting member 21a, but may also be formed partially. The recess 131 formed inside the upper-surface portion of the first solution tank 72 can reflect or refract light emitted from above, so the light can enter a photovoltaic layer 31 through a first electrode 11.

### 8-2. Effects of Eighth Embodiment

In the aforementioned eighth embodiment, the wedge-shaped recess 131 is formed inside the upper-surface portion of the first solution tank 72, instead of the reflecting member 101. Therefore, light can be reflected or refracted without forming the reflecting member 101, so the light can enter the photovoltaic layer 31 through the first electrode 11.

In addition, since the recess 131 is formed, a gas generated in the first solution tank 72 can be collected in the recess 131 and collected outside.

While several embodiments of the present invention have been explained, these embodiments have been presented by way of examples, and are not intended to limit the scope of the invention. These novel embodiments can be embodied in a variety of other forms, and various omissions, substitutions, and changes can be made without departing from the spirit of the invention. These embodiments and their modifications are incorporated in the scope and spirit of the invention, and are also incorporated in the scope of the invention and its equivalents described in the scope of the appended claims.

### Reference Signs List

- 1, 3: injection port
- 2, 4: collection port
- 11: first electrode
- 12: first catalyst layer
- 21: second electrode
- 22: first insulating layer
- 21a: ion transmitting member
- 31: photovoltaic layer
- 41: stack
- 51: line
- 61: tube
- 62: base
- 63: second insulating layer
- 64: second catalyst layer
- 65: reflecting layer
- 66: pore
- 68: ion-exchange membrane
- 71: solution tank
- 72: first solution tank
- 73: second solution tank
- 81: first solution
- 82: second solution
- 91, 101: reflecting member
- 111: third insulating layer
- 121: support substrate

## Claims

1. A photoelectrochemical reaction device comprising:
a solution tank configured to contain a first solution;
a stack accommodated in the solution tank, and including a first electrode, a second electrode formed below the first electrode, a photovoltaic layer formed between the first electrode and the second electrode and configured to perform charge separation by light energy from above, and a first insulating layer formed on an exposed surface of the second electrode;
a tube accommodated in the solution tank, arranged above the first electrode to face the first electrode, configured to contain a second solution, and including pores extending from an outer surface to an inner surface; and
a wiring configured to electrically connect the second electrode and the tube.

2. The photoelectrochemical reaction device of claim 1, wherein the tube includes a tubular base having conductivity, and a second insulating layer formed on an outer surface of the base.

3. The photoelectrochemical reaction device of claim 2, wherein the tube further includes a reflecting layer formed on an outer surface of the second insulating layer.

4. The photoelectrochemical reaction device of claim 2, wherein the tube further includes a second catalyst layer formed on an inner surface of the base.

5. The photoelectrochemical reaction device of claim 1, wherein the stack further includes a first catalyst layer formed on an obverse surface of the first electrode.

6. The photoelectrochemical reaction device of claim 1, further comprising a reflecting member formed on the tube.

7. The photoelectrochemical reaction device of claim 1, wherein the pores are filled with an ion exchange membrane.

8. A photoelectrochemical reaction device comprising:
a solution tank including a first solution tank configured to contain a first solution, and a second solution tank configured to contain a second solution;
a stack which includes a first electrode accommodated in the first solution tank, a second electrode accommodated in the second solution tank and formed below the first electrode, and a photovoltaic layer formed between the first electrode and the second electrode and configured to perform charge separation by light energy from above, the stack separating the first solution tank and the second solution tank;
an ion transmitting member formed adjacent to the stack, and configured to separate the first solution tank and the second solution tank together with the stack; and
a reflecting member accommodated in the first solution tank and arranged immediately above the ion transmitting member.

## Amended claims

### Amended claims under Art. 19.1 PCT

1. A photoelectrochemical reaction device comprising:
a solution tank configured to contain a first solution;
a stack accommodated in the solution tank, and including a first electrode, a second electrode formed below the first electrode, a photovoltaic layer formed between the first electrode and the second electrode and configured to perform charge separation by light energy from above, and a first insulating layer formed on an exposed surface of the second electrode;
a tube accommodated in the solution tank, arranged above the first electrode to face the first electrode, configured to contain a second solution, and including pores extending from an outer surface to an inner surface; and
a wiring configured to electrically connect the second electrode and the tube.

2. The photoelectrochemical reaction device of claim 1, wherein the tube includes a tubular base having conductivity, and a second insulating layer formed on an outer surface of the base.

3. The photoelectrochemical reaction device of claim 2, wherein the tube further includes a reflecting layer formed on an outer surface of the second insulating layer.

4. The photoelectrochemical reaction device of claim 2, wherein the tube further includes a second catalyst layer formed on an inner surface of the base.

5. The photoelectrochemical reaction device of claim 1, wherein the stack further includes a first catalyst layer formed on an obverse surface of the first electrode.

6. The photoelectrochemical reaction device of claim 1, further comprising a reflecting member formed on the tube.

7. The photoelectrochemical reaction device of claim 1, wherein the pores are filled with an ion-exchange membrane.

8. A photoelectrochemical reaction device comprising:
a solution tank including a first solution tank configured to contain a first solution, and a second solution tank configured to contain a second solution;
a stack which includes a first electrode accommodated in the first solution tank, a second electrode accommodated in the second solution tank and formed below the first electrode, and a photovoltaic layer formed between the first electrode and the second electrode and configured to perform charge separation by light energy from above, the stack separating the first solution tank and the second solution tank;
an ion transmitting member formed adjacent to the stack, and configured to separate the first solution tank and the second solution tank together with the stack; and
a reflecting member accommodated in the first solution tank and arranged immediately above the ion transmitting member.

9. (added) The photoelectrochemical reaction device of claim 8, wherein the ion transmitting member includes pores extending from an obverse surface to a reverse surface of the ion transmitting member.

10. (added) The photoelectrochemical reaction device of claim 9, wherein the pores are filled with an ion-exchange membrane.

11. (added) The photoelectrochemical reaction device of claim 8, wherein the ion transmitting member includes slits extending from an obverse surface to a reverse surface of the ion transmitting member.

12. (added) The photoelectrochemical reaction device of claim 11, wherein the slits are filled with an ion-exchange membrane.

13. (added) The photoelectrochemical reaction device of any one of claims 8 to 12, further comprising a first insulating layer formed on a surface of the ion transmitting member, which faces the first solution tank.

14. (added) The photoelectrochemical reaction device of any one of claims 8 to 13, wherein the reflecting member includes a light-transmitting material and has a hollow structure.

15. (added) The photoelectrochemical reaction device of claim 14, wherein an interior of the hollow structure of the reflecting member is coated with a metal.

16. (added) The photoelectrochemical reaction device of any one of claims 8 to 15, further comprising a first catalyst layer formed on an obverse surface of the first electrode.

17. (added) The photoelectrochemical reaction device of any one of claims 8 to 16, further comprising a second catalyst layer formed on an obverse surface of the second electrode.

18. (added) A photoelectrochemical reaction device comprising:
a solution tank including a first solution tank configured to contain a first solution, and a second solution tank configured to contain a second solution;
a support substrate configured to separate the first solution tank and the second solution tank, and including a slit extending from an obverse surface to a reverse surface of the support substrate;
a stack including a first electrode in contact with the first solution, a second electrode in contact with the second solution and formed below the first electrode, and a photovoltaic layer formed between the first electrode and the second electrode and configured to perform charge separation by light energy from above, the stack covering the slit; and
a reflecting member accommodated in the first solution tank and arranged immediately above a region of the support substrate except for the slit.

19. (added) The photoelectrochemical reaction device of claim 18, wherein the support substrate includes pores.

20. (added) The photoelectrochemical reaction device of claim 19, wherein the pores are filled with an ion-exchange membrane.

21. (added) A photoelectrochemical reaction device comprising:
a solution tank including a first solution tank configured to contain a first solution, and a second solution tank configured to contain a second solution;
a stack which includes a first electrode accommodated in the first solution tank, a second electrode accommodated in the second solution tank and formed below the first electrode, and a photovoltaic layer formed between the first electrode and the second electrode and configured to perform charge separation by light energy from above, the stack separating the first solution tank and the second solution tank; and
an ion transmitting member formed adjacent to the stack, and configured to separate the first solution tank and the second solution tank together with the stack,
wherein a wedge-shaped recess is formed inside the first solution tank in a position immediately above the ion transmitting member.
